# EUROPÄISCHE PATENTSCHRIFT

(11) **EP 3 769 018 B1**
(45) Veröffentlichungstag und Bekanntmachung des Hinweises auf die Patenterteilung: **01.05.2024**
(21) Anmeldenummer: 18712905.1
(22) Anmeldetag: 23.03.2018
(51) Int. Cl.: F24S 30/425, H02S 20/32

(54) **SCHWENKEINHEIT FÜR EINE NACHFÜHRVORRICHTUNG FÜR SOLARMODULE**
PIVOTING UNIT FOR A TRACKING APPARATUS FOR SOLAR MODULES
UNITÉ DE PIVOTEMENT POUR UN DISPOSITIF DE POURSUITE POUR DES MODULES SOLAIRES

(43) Veröffentlichungstag der Anmeldung: 27.01.2021
(73) Patentinhaber: Schletter International B.V., 1101 Amsterdam (NL)
(72) Erfinder: DECHANT, Gabriel, 83257 Gstadt am Chiemsee (DE)
(74) Vertreter: Thum, Bernhard
(86) Internationale Anmeldenummer: PCT/EP2018/057495
(87) Internationale Veröffentlichungsnummer: WO 2019/179632

(56) Entgegenhaltungen:
- WO-A1-2004/044501
- WO-A1-2009/146468
- WO-A1-2016/192766
- WO-A1-2018/009634
- CN-A- 104 539 230
- DE-A1- 2 908 122
- FR-A1- 2 992 405
- US-A- 3 597 559
- US-A- 3 818 747
- US-A- 4 606 235
- US-A1- 2008 066 985
- US-A1- 2014 338 659
- US-A1- 2016 365 830

## Beschreibung

Die vorliegende Erfindung betrifft eine Schwenkeinheit für eine Nachführvorrichtung für Solarmodule. Ferner betrifft die vorliegende Erfindung eine Nachführvorrichtung mit wenigstens einer solchen Schwenkeinheit. Die Erfindung ist zudem auf ein Montageverfahren für eine Nachführvorrichtung gerichtet.

Nachführvorrichtungen für Solarmodule sind aus dem Stand der Technik bekannt und beispielsweise in WO 2016/192766 A1 offenbart. Die Druckschrift WO 2016/192766 A1 offenbart eine Nachführvorrichtung für Solarmodule mit einer Reihe von entlang einer Längsachse angeordneten Pfosten. An jedem Pfosten ist ein Querträger schwenkbar gelagert, wobei die Querträger um eine gemeinsame, parallel zur Längsachse verlaufende Schwenkachse schwenkbar sind. An jedem Querträger ist ein Zahnkranz befestigt, dessen Zahnung in Eingriff mit einem am jeweiligen Pfosten gelagerten, motorisch getriebenen Zahnrad in Eingriff ist. Das Zahnrad und der Zahnkranz müssen über separate Einrichtungen gegen eine transversale Verschiebung gesichert werden.

WO 2018/009634 A1 offenbart ein System zum Bewegen und Verriegeln von Solarmodulen. Das System umfasst einen Antriebsmechanismus mit einer Antriebswelle, einem mit der Antriebswelle gekoppelten Ritzel und einem mit einem Solarpanel gekoppelten Getriebe, und einen Verriegelungsmechanismus mit einer Verriegelungsplatte.

Es ist eine Aufgabe der vorliegenden Erfindung eine Schwenkeinheit für eine Nachführvorrichtung für Solarmodule bereitzustellen, die einen vereinfachten Aufbau aufweist, eine schnelle und einfache Montage ermöglicht und Schäden an der Schwenkeinheit und daran angeschlossenen Komponenten verhindern kann.

Diese Aufgabe wird mit einer Schwenkeinheit für eine Nachführvorrichtung für Solarmodule mit den Merkmalen des Anspruchs 1 gelöst.

Weitere Ausführungsformen sind in den abhängigen Ansprüchen angegeben.

Die Schwenkeinheit für eine Nachführvorrichtung für Solarmodule umfasst wenigstens einen um eine Schwenkachse verschwenkbaren Querträger, wenigstens einen mit dem wenigstens einen Querträger verbundenen Antriebsbogen, der mehrere Antriebsausnehmungen und mehrere Halteausnehmungen aufweist, und wenigstens eine drehbar gelagerte Antriebseinrichtung. Die drehbar gelagerte Antriebseinrichtung ist derart ausgebildet, dass sie zum Verschwenken des wenigstens einen Querträgers in wenigstens eine Antriebsausnehmung des Antriebsbogens eingreift. Zudem ist die Antriebseinrichtung derart ausgebildet, dass sie zum Halten des Querträgers in einer Schwenkstellung in wenigstens eine der Halteausnehmungen eingreift.

Die Antriebseinrichtung ist derart ausgebildet, dass sie abwechselnd in eine der Antriebsausnehmungen und in eine der Halteausnehmungen eingreift. Wenn sich die wenigstens eine Antriebseinrichtung mit einer der Halteausnehmungen in Eingriff befindet, können der Querträger und der damit verbundene Antriebsbogen in ihrer eingestellten Schwenkstellung gehalten werden, ohne dass ein Torsionsmoment auf einen angeschlossenen Antrieb oder eine mit der Schwenkeinheit verbundene Antriebswelle übertragen wird. Dadurch können die Komponenten zum Antreiben der Schwenkeinheit wie z.B. die Antriebswelle und/oder der Antrieb entlastet werden. Ferner können dadurch auch windinduzierte Schwingungen in der Schwenkeinheit und den damit verbundenen Komponenten verhindert werden. Derartige Schwingungen können Schäden an der Schwenkeinheit, den daran angebrachten Solarmodulen und weiteren mit der Schwenkeinheit verbundenen Komponenten erzeugen. Diese Schwingungen können durch die steife Verbindung des Antriebsbogens mit der wenigstens einen Antriebseinrichtung vermieden werden, wenn die Antriebseinrichtung mit einer der Halteausnehmungen in Eingriff steht.

Die Schwenkeinheit weist einen vereinfachten Aufbau auf, der eine schnelle und einfache Montage erlaubt. Die Schwenkeinheit kann als eigenständige bzw. unabhängige Einheit vormontiert werden. Die Vormontage erfolgt unabhängig von dem oder den Pfosten zur Verankerung der Nachführvorrichtung im Untergrund. Die Montage der Schwenkeinheit kann beispielsweise in einer Fabrikhalle erfolgen. Die vormontierte Schwenkeinheit muss dann am Einsatzort der Nachführvorrichtung nur noch mit dem oder den Pfosten verbunden werden, um die Montage abzuschließen. Die Pfosten können vorab und unabhängig von der Schwenkeinheit im oder am Untergrund verankert werden. Die Vormontierbarkeit der Schwenkeinheit erleichtert die Montage am Einsatzort erheblich.

Die Halteausnehmungen können gewölbt oder gekrümmt ausgebildet sein. Die Antriebsausnehmungen können sich in radialer Richtung weiter als die Halteausnehmungen in den Antriebsbogen hinein erstrecken. Die radial äußersten Punkte der Halteausnehmungen können auf dem Außenradius des Antriebsbogens liegen. Diese radial äußersten Punkte können den Übergang der Halteausnehmung in die nächste Antriebsausnehmung bilden. Die Antriebsausnehmungen können in Form von Einschnitten oder Schlitzen in dem Antriebsbogen ausgebildet sei. Die Antriebsausnehmungen können sich von radial außen oder radial innen mit einer vordefinierten radialen Erstreckung in den Antriebsbogen hinein erstrecken. Auch die gewölbten Halteausnehmungen können sich mit einer vorbestimmten radialen Erstreckung von radial außen oder radial innen in den Antriebsbogen hinein erstrecken. Die Antriebsausnehmungen können sich in radialer Richtung aufweiten. Der Abstand zwischen zwei gegenüberliegenden Flanken einer Antriebsausnehmung kann sich somit in radialer Richtung vergrößern.

Die drehbar gelagerte Antriebseinrichtung weist wenigstens ein exzentrisch angeordnetes Antriebselement auf, das zum Verschwenken des wenigstens einen Querträgers in die Antriebsausnehmungen des Antriebsbogens eingreift. Unter "exzentrisch angeordnet" ist in diesem Zusammenhang zu verstehen, dass das Antriebselement einen radialen Abstand oder Versatz zur Drehachse der Antriebseinrichtung aufweist. Das Antriebselement kann sich parallel zur Drehachse der Antriebseinrichtung erstrecken. Das wenigstens eine Antriebselement mit einem vorbestimmten radialen Abstand auf einer Kreisbahn um die Drehachse der Antriebseinrichtung rotieren. Das Antriebselement kann eine Längsachse oder Mittelachse aufweisen, die sich mit einem radialen Abstand parallel zur Drehachse der Antriebseinrichtung erstreckt. Die Drehachse der Antriebseinrichtung erstreckt sich im Wesentlichen parallel zur Schwenkachse. Wenigstens eine mit der Antriebseinrichtung verbundene Antriebswelle oder Antriebsstange kann sich ebenfalls im Wesentlichen parallel zur Schwenkachse erstrecken.

Durch das Eingreifen des wenigstens einen Antriebselements in die wenigstens eine Antriebsausnehmung werden die Antriebseinrichtung und die angetriebene Einheit derart drehmomentübertragend gekoppelt, dass es bei einer Ausführung einer Drehbewegung der Antriebsanordnung zu einer schrittweisen Schwenk- oder Verstellbewegung des Antriebsbogens und des daran angebrachten Querträgers um die Schwenkachse kommen kann. Eine kontinuierliche Drehbewegung der Antriebseinrichtung um die Drehachse kann dementsprechend zu einer schrittweisen Schwenk- oder Verstellbewegung der des Antriebsbogen und des daran angebrachten Querträgers führen. Die Schwenk- oder Verstellbewegung des Antriebsbogens und des daran angebrachten Querträgers wird immer dann ausgeführt, wenn sich das wenigstens eine Antriebselement mit einer der Antriebsausnehmungen in Eingriff befindet. Bei einer Drehbewegung der Antriebseinrichtung kann das wenigstens eine Antriebselement in eine der Antriebsausnehmung eingreifen, den Antriebsbogen und den Querträger mitnehmen und anschließend die Antriebsausnehmung wieder verlassen. Zwischen dem Eingreifen des Antriebselements in die Antriebsausnehmung und dem Verlassen der Antriebsausnehmung durch das Antriebselement drückt das wenigstens eine Antriebselement gegen eine Wandung der Antriebsausnehmung, wodurch ein Drehmoment auf den Antriebsbogen und den Querträger ausgeübt wird, das zu einer Schwenk- oder Verstellbewegung des Antriebsbogens und des Querträgers führt.

Die Schwenkeinheit kann wenigstens ein Trägerelement zum Verbinden der Schwenkeinheit mit einem im oder am Untergrund verankerbaren Pfosten aufweisen. Die Pfosten können in den Untergrund gerammt oder über ein Fundament mit dem Untergrund verbunden werden. Beispielsweise können dazu im Untergrund verankerte Fundamentelemente verwendet werden. Der wenigstens eine Querträger kann um die Schwenkachse verschwenkbar mit dem wenigstens einen Trägerelement verbunden sein. Das Trägerelement und der Querträger können den Schwenkpunkt definieren, durch den sich die Schwenkachse erstreckt. In der Ausgangsstellung bzw. in der Montagestellung der Schwenkeinheit kann sich das Trägerelement senkrecht zum Querträger erstrecken. Das Trägerelement kann mit seinem dem Schwenkpunkt entgegengesetzten Ende mit einem im oder am Untergrund verankerbaren oder verankerten Pfosten verbunden werden. An diesem Ende kann auch die Antriebseinheit angebracht sein. Im montierten Zustand können der Querträger und der damit verbundene Antriebsbogen relativ zu dem Trägerelement mittels der Antriebseinrichtung verschwenkt werden.

Die wenigstens eine Antriebseinrichtung kann derart ausgebildet sein, dass sie eine Führung für den wenigstens einen Antriebsbogen bildet. Die Antriebseinrichtung kann den Antriebsbogen in axialer und/oder radialer Richtung führen, um zu verhindern, dass die Antriebseinrichtung außer Eingriff mit dem Antriebsbogen gelangt. Die Antriebseinrichtung kann derart ausgebildet sein, dass sie ein Ausweichen des Antriebsbogens in axialer Richtung verhindern kann. Dazu kann die Antriebseinrichtung Abschnitte oder Elemente haben, die sich senkrecht zu ihrer Drehachse erstrecken.

Die Schwenkeinheit kann ferner wenigstens eine Führungseinrichtung aufweisen, die den wenigstens einen Antriebsbogen in radialer Richtung führt. Die wenigstens eine Führungseinrichtung kann eine Führungsrolle aufweisen, an der sich der wenigstens eine Antriebsbogen in radialer Richtung abstützen kann. Der Antriebsbogen kann mit der wenigstens einen Führungseinrichtung annähernd in seiner vorbestimmten radialen Position gehalten werden, in der der Eingriff zwischen der Antriebseinrichtung und dem Antriebsbogen gewährleistet werden kann.

Die wenigstens eine Antriebseinrichtung weist wenigstens ein Halteelement auf Das wenigstens eine Halteelement kann sich mit einem radialen Abstand parallel zu dem wenigstens einen Antriebselement erstreckt. Das Haltelement kann mit einer der Halteausnehmungen des Antriebsbogens zusammenwirken, um den Antriebsbogen und den damit verbundenen Querträger in einer eingestellten Schwenkstellung zu halten. Das Halteelement weist einen Querschnitt oder eine Kontur auf, die zusammen mit den Halteausnehmungen verhindern kann, dass der Antriebsbogen relativ zu der Antriebseinrichtung bewegt werden kann, wenn das Halteelement mit der Halteausnehmung in Eingriff steht.

Das wenigstens eine Halteelement greift immer dann in eine Halteausnehmung ein, wenn das wenigstens eine Antriebselement nicht in Eingriff mit der wenigstens einen Antriebsausnehmung steht. Das wenigstens eine Halteelement kann formschlüssig in die wenigstens eine Halteausnehmung eingreifen. In diesem Zustand kann der Antriebsbogen in seiner eingestellten Position gehalten werden. Die Antriebseinrichtung und der Antriebsbogen befinden sich somit in einer Sperrstellung. In der Sperrstellung wird ein Verdrehen des Antriebsbogens um dessen Dreh- oder Schwenkachse verhindert. Das Halteelement greift mit einem ersten Abschnitt seines Querschnitts in die Halteausnehmung ein, wobei sich dieser Abschnitt aufgrund der Drehbewegung der Antriebseinrichtung kontinuierlich vergrößert. Sobald das wenigstens eine Halteelement auch nur teilweise in die Halteausnehmung eingreift, kann ein Verdrehen des Antriebsbogens und des daran angebrachten Querträgers um die Schwenkachse verhindert werden. Wird die Antriebseinrichtung weiter angetrieben, verlässt das Halteelement die Halteausnehmung wieder und gibt den Antriebsbogen frei für einen von dem Antriebselement initiierten Verstellschritt.

Wird die Antriebseinrichtung weiter angetrieben, drehen sich das Halteelement und das Antriebselement weiter, damit das Antriebselement mit der nächsten Antriebsausnehmung in Eingriff gebracht werden kann. Beispielsweise kann das Antriebselement um 90° bis 270° nach dem Austritt aus einer Antriebsausnehmung um die Drehachse der Antriebsanordnung rotiert werden, um mit der nächsten Antriebsausnehmung in Eingriff zu gelangen. Gleichzeitig dreht sich das wenigstens eine Halteelement um den gleichen oder einen ähnlichen Drehwinkel in der Halteausnehmung und verlässt die Halteausnehmung sobald das Antriebselement in die nächste Antriebsausnehmung eingreift.

Das wenigstens eine Halteelement und/oder das wenigstens eine Antriebselement können sich im wesentlichen parallel zur Drehachse der Antriebseinrichtung erstrecken. Die Antriebsausnehmungen und die Halteausnehmungen können korrespondierend zu der Form oder dem Querschnitt des Antriebselements und des Halteelements ausgebildet sein.

Die wenigstens eine Antriebseinrichtung kann wenigstens einen Kopplungsabschnitt zum Koppeln mit einem Antrieb einer Nachführvorrichtung und/oder weiteren Schwenkeinheiten aufweisen. Der Kopplungsabschnitt kann komplementär zu einem Kopplungsabschnitt einer Antriebswelle oder einer Antriebsstange ausgebildet sein. Der Kopplungsabschnitt kann zum Herstellen eines Form- und/oder eines Kraftschlusses mit einem Kopplungsabschnitt einer Antriebswelle oder einer Antriebsstange ausgebildet sein. Der Kopplungsabschnitt der Antriebseinrichtung kann mit wenigstens einer Abflachung versehen sein. Ferner kann der Kopplungsabschnitt wenigstens einen sich in radialer Richtung erstreckenden Vorsprung aufweisen. Der wenigstens eine radiale Vorsprung kann in eine Ausnehmung in einer Antriebswelle oder einer Antriebsstange eingreifen, um einen Form- und/oder Kraftschluss zur Drehmomentübertragung von der Antriebswelle auf die Antriebseinrichtung herzustellen. Es ist ebenfalls denkbar, dass die Antriebswelle wenigstens einen radialen Vorsprung aufweist, der in wenigstens eine Ausnehmung in der Antriebseinrichtung zur Herstellung eines Form- und/oder Kraftschlusses eingreift. Der wenigstens eine Kopplungsabschnitt der Antriebseinrichtung kann wenigstens eine Ausnehmung mit einem vorbestimmten Querschnitt aufweisen. In die Ausnehmung des Kopplungsabschnitts kann wenigstens ein komplementärer Abschnitt der Antriebswelle oder Antriebsstange eingreifen. Die Ausnehmung kann beispielsweise mit einem Flach-, Sechskant-, Vierkant- oder Vielzahn-Querschnitt versehen sein. Der korrespondierende und zu der Ausnehmung komplementär ausgebildete Abschnitt der Antriebswelle kann beispielsweise in Form einer Flachform, eines Sechskants oder Vielzahns ausgebildet sein und in die Ausnehmung eingesteckt werden. Es ist ebenfalls denkbar, an der Antriebseinrichtung einen flachen, sechskantförmigen oder vielzahnförmigen Abschnitt vorzusehen, der mit einer Ausnehmung mit einem Flach-, Sechskant-, Vierkant- oder Vielzahn-Querschnitt in der Antriebswelle oder der Antriebstange zusammenwirkt.

Die wenigstens eine Antriebseinrichtung kann wenigstens einen Lagerabschnitt aufweisen, mit dem die Antriebseinrichtung in einer Lagerstelle drehbar gelagert werden kann. Die Lagerstellen können beispielsweise in Befestigungselementen ausgebildet sein, über die die Antriebseinrichtung mit dem wenigstens einen Trägerelement und/oder dem wenigstens einen Pfosten verbunden ist. Ferner können die Lagerstellen in oder an dem Trägerelement oder den Trägerelementen ausgebildet sein. Die Lagerstellen können auch an dem oder den Pfosten ausgebildet sein. Der Lagerabschnitt kann in Richtung der Drehachse zwischen dem Antriebselement und dem Kopplungsabschnitt angeordnet sein.

Der wenigstens eine Kopplungsabschnitt kann ferner zum Ausgleichen eines Winkelversatzes ausgebildet sein. Insbesondere kann der wenigstens eine Kopplungsabschnitt zum Ausgleichen eines Winkelversatzes zwischen der Antriebseinrichtung und einem Antrieb bzw. einer Antriebswelle ausgebildet sein. Dazu kann der wenigstens eine Kopplungsabschnitt beispielsweise eine in Richtung der Drehachse der Antriebseinrichtung zumindest abschnittsweise gewölbte Außen- und/oder Innenfläche aufweisen. Die gewölbte Außenfläche kann an dem wenigstens einen radialen Vorsprung vorgesehen sein, der zur Kopplung mit einer Antriebswelle oder einem Antrieb dient. Der wenigstens eine Kopplungsabschnitt der Antriebseinrichtung kann wenigstens eine Ausnehmung aufweisen, in die ein Abschnitt der Antriebswelle oder wenigstens ein Vorsprung an der Antriebswelle eingreift. Auch die wenigstens eine Ausnehmung des Kopplungsabschnitts und/oder der korrespondierende Abschnitt der Antriebswelle können mit gewölbten Flächen ausgebildet sein, die zum Ausgleich eines Winkelversatzes dienen. Die Ausnehmung kann beispielsweise mit einem Sechskant-Querschnitt versehen sein. Der korrespondierende Abschnitt der Antriebswelle oder der Antriebsstange kann in diesem Fall in Form eines Sechskants ausgebildet sein. Die Flächen des Sechskant-Querschnitts der Ausnehmung und/oder die Außenflächen des Sechskants der Antriebswelle können gewölbt sein, um einen Winkelversatz ausgleichen zu können. Es ist denkbar, an der Antriebseinrichtung einen sechskantförmigen Abschnitt mit gewölbten Außenflächen vorzusehen, der mit einer einen Sechskant-Querschnitt aufweisenden Ausnehmung mit möglicherweise ebenfalls gewölbten Flächen in der Antriebswelle oder der Antriebstange zusammenwirkt.

Der wenigstens eine Kopplungsabschnitt und/oder das Ende der Antriebswelle kann zum Ausgleichen von Toleranzen in Richtung der Schwenkachse ausgebildet sein. Der wenigstens eine Kopplungsabschnitt und ein Abschnitt einer Antriebswelle können komplementär ausgebildet sein, sodass sie miteinander in Eingriff gebracht werden können. Der wenigstens eine Kopplungsabschnitt und/oder der entsprechende wenigstens eine Abschnitt der Antriebswelle können derart ausgebildet und/oder dimensioniert werden, dass montagebedingte Abstandstoleranzen zwischen benachbarten Schwenkeinheiten bzw. nebeneinander angeordneten Pfosten in begrenztem Maße kompensiert werden können.

Die wenigstens eine Antriebseinrichtung kann wenigstens ein Verbindungselement aufweisen, das den Kopplungsabschnitt mit dem Antriebselement verbindet. Das wenigstens eine Verbindungselement kann sich senkrecht zur Drehachse der Antriebsanordnung erstrecken. Das Verbindungselement kann z.B. nockenförmig oder scheibenförmig ausgebildet sein. Die wenigstens eine Antriebseinrichtung kann zwei Verbindungselemente aufweisen. Die beiden Verbindungselemente können eine axiale Führung für den Antriebsbogen bilden. Die beiden Verbindungselemente können den wenigstens einen Antriebsbogen in axialer Richtung abschnittsweise zwischen sich einschließen. Das wenigstens eine Antriebselement und/oder das wenigstens eine Halteelement können sich zwischen den beiden Verbindungselementen erstrecken. Das Antriebselement und das Halteelement können sich in axialer Richtung erstrecken.

Die Schwenkeinheit kann wenigstens ein Befestigungselement zum Anbringen der wenigstens einen Antriebseinrichtung an dem wenigstens einen Trägerelement und/oder Pfosten haben. Die wenigstens eine Antriebseinrichtung kann an dem wenigstens einen Befestigungselement drehbar gelagert sein. Das Befestigungselement kann mit einer Öffnung versehen sein, die wenigstens eine Lagerstelle für das Antriebselement bildet. In der Öffnung kann wenigstens ein Lagerabschnitt des Antriebselements mindestens abschnittsweise aufgenommen sein. In der Öffnung kann eine Lagerbuchse angeordnet sein.

Das wenigstens eine Antriebselement kann einen kreisförmigen Querschnitt aufweisen. Das wenigstens eine Antriebselement kann einen von einem kreisförmigen Querschnitt abweichenden Querschnitt haben. Der Querschnitt kann oval oder linsenförmig sein. Durch einen ovalen oder linsenförmigen Querschnitt des Antriebselements kann der sichere Eingriff des Antriebselements in die Antriebsausnehmungen des Antriebsbogens sichergestellt werden. Dadurch können insbesondere Toleranzschwankungen innerhalb der Schwenkeinheit ausgeglichen werden. Vergrößert sich beispielsweise der radiale Abstand zwischen der Antriebseinrichtung und dem Antriebsbogen aufgrund von Toleranzschwankungen, kann durch die ovale oder linsenförmige Form des Antriebselements der Eingriff des Antriebselements in die Antriebskontur des Antriebsbogens sichergestellt werden.

Die wenigstens eine Antriebseinrichtung kann sich zumindest abschnittsweise durch das wenigstens eine Trägerelement erstrecken. Dazu kann das Trägerelement eine Ausnehmung oder eine Öffnung aufweisen. Das Trägerelement kann wenigstens eine Lagerstelle aufweisen, die zur Lagerung der wenigstens einen Antriebseinrichtung an dem Trägerelement dienen kann. Die wenigstens eine Lagerstelle kann in einer Ausnehmung oder einer Öffnung in dem Trägerelement ausgebildet sein. Das Antriebselement und das Haltelement der Antriebseinrichtung können innerhalb des Querschnitts des Trägerelements angeordnet sein. Die Antriebskontur des Antriebsbogens kann mit der Antriebseinrichtung innerhalb des Querschnitts des Trägerelements in Eingriff stehen. Dadurch kann der Eingriffsbereich zwischen dem Antriebsbogen und der Antriebseinrichtung vor Witterungseinflüssen geschützt werden. Die wenigstens eine Antriebseinrichtung kann innerhalb eines Trägerelements angeordnet sein. Ferner kann die wenigstens eine Antriebseinrichtung zwischen zwei Trägerelementen angeordnet sein. Jedes der Trägerelemente kann eine Lagerstelle aufweisen, in der die Antriebseinrichtung gelagert ist. Die Lagerstellen können Lagerflansche sein. Ferner können die Lagerstellen in Form von Lagervorsprüngen ausgebildet sein. Ein Lagerflansch kann ein separates Bauteil und beispielsweise mit dem wenigstens einen Trägerelement verschraubt oder andersartig verbunden werden. Wenigstens ein Lagervorsprung kann an dem wenigstens einen Trägerelement ausgebildet sein. Der wenigstens eine Lagerflansch oder der wenigstens eine Lagervorsprung kann jeweils eine Ausnehmung zur Aufnahme der Lagerabschnitte der Antriebseinrichtung aufweisen. Die Lagerstellen können beispielsweise mit Gleitlagern versehen sein.

Die wenigstens eine Antriebseinrichtung der Schwenkeinheit kann über wenigstens einen Adapter mit der wenigstens einen Antriebswelle oder einem Antrieb gekoppelt sein. In diesem Fall kann der wenigstens eine Kopplungsabschnitt der Antriebseinrichtung mit dem Adapter gekoppelt sein, der wiederum mit der Antriebswelle oder der Antriebsstange oder dem Antrieb gekoppelt ist.

Die vorliegende Erfindung betrifft ferner eine Nachführvorrichtung für Solarmodule mit wenigstens einer Schwenkeinheit der voranstehend beschriebenen Art und wenigstens einem Pfosten, der im oder am Untergrund verankerbar oder verankert ist.

Die wenigstens eine Schwenkeinheit kann über wenigstens eine Antriebswelle mit wenigstens einer weiteren Schwenkeinheit und/oder einem Antrieb der Nachführvorrichtung gekoppelt sein. Die wenigstens eine Schwenkeinheit kann auch ohne Antriebswelle unmittelbar mit einem Antrieb gekoppelt werden. Der Antrieb kann zwischen zwei oder mehr Schwenkeinheiten oder am Ende einer Anordnung aus mehreren gekoppelten Schwenkeinheiten angebracht sein. Der Antrieb kann ein Motor wie zum Beispiel ein Elektromotor sein. Die Schwenkeinheit kann über den wenigstens einen Kopplungsabschnitt der wenigstens einen Antriebseinrichtung mit der wenigstens einen Antriebswelle gekoppelt werden. Der Kopplungsabschnitt kann direkt mit einem Antrieb gekoppelt werden. An dem Querträger können Tragschienen oder Tragrahmen zum Befestigen von Solarmodulen angebracht sein. Die Tragrahmen können sich aus Querträgern und Tragschienen zusammensetzen. Das wenigstens eine Trägerelement kann mit seinem der Schwenkachse entgegengesetzten Ende mit dem im oder am Boden verankerten oder verankerbaren Pfosten verbunden sein.

Das wenigstens eine Trägerelement und/oder der Pfosten können wenigstens einen Verbindungsabschnitt aufweisen, über den das wenigstens eine Trägerelement und der wenigstens Pfosten miteinander verbunden werden können. Der wenigstens ein Verbindungsabschnitt des wenigstens einen Trägerelements und/oder des wenigstens einen Pfostens können zum Ausgleich eines Versatzes in Richtung der Schwenkachse ausgebildet sein. Der wenigstens ein Verbindungsabschnitt des wenigstens einen Trägerelements und/oder des wenigstens einen Pfostens können ferner zum Ausgleich eines quer zur Schwenkachse auftretenden Versatzes, d.h. eines in vertikaler Richtung und/oder horizontaler Richtung auftretenden Versatzes, ausgebildet sein. Um Versätze quer zur Schwenkachse ausgleichen zu können, können im Verbindungsabschnitt des wenigstens einen Pfostens und/oder im Verbindungsabschnitt des wenigstens einen Trägerelements mehrere Öffnungen ausgebildet sein, über die die zum Ausgleich des Versatzes geeignete Position der Schwenkeinheit am Pfosten gewählt werden kann. Das wenigstens eine Trägerelement kann durch wenigstens ein sich durch eine entsprechende Öffnung erstreckendes Verbindungselement mit dem Pfosten verbunden werden und so die zum Ausgleich des Versatzes geeignete Position einnehmen.

Die erwähnten Versätze können beispielsweise durch Toleranzen und/oder sich unterscheidende Abstände zwischen benachbarten Schwenkeinheiten oder zwischen benachbarten Pfosten entstehen. Ferner kann ein Versatz auch durch unebenes Gelände hervorgerufen werden, in dem eine Nachführvorrichtung aufgebaut werden soll.

Die vorliegende Erfindung betrifft ferner ein Montageverfahren für eine Nachführvorrichtung. Das Montageverfahren umfasst die Schritte von:
- Vormontieren der Schwenkeinheit, und
- Verbinden der Schwenkeinheit mit im oder am Untergrund verankerten oder verankerbaren Pfosten.

Vor dem Verbindungsschritt kann ein Verankerungsschritt erfolgen, bei dem die Pfosten im oder am Untergrund verankert werden. Im Fall von mehreren Schwenkeinheiten können in einem weiteren Schritt die einzelnen Schwenkeinheiten über Antriebswellen miteinander verbunden werden. Die Schwenkeinheiten können über einen Antrieb verschwenkt werden, der mit den Antriebswellen gekoppelt ist.

Das Verfahren kann ferner die folgenden Schritte umfassen:
- Verbinden von Tragschienen und/oder Tragrahmen mit der mindestens einen Schwenkeinheit, und
- Verbinden wenigstens eines Solar-Modules mit den Tragschienen und/oder Tragrahmen.

Das Montageverfahren kann ferner wenigstens einen der folgenden Schritte umfassen:
- Verbinden der wenigstens einen Schwenkeinheit mit einem Antrieb, und/oder
- Verbinden der wenigstens einen Schwenkeinheit mit einer weiteren Schwenkeinheit über wenigstens eine Antriebswelle .

Im Folgenden werden beispielhafte Ausführungsformen der vorliegenden Erfindung mit Bezug auf die beigefügten Figuren beschrieben. Es stellen dar:
- Figuren 1 und 2: perspektivische Ansichten eines Nachführsystems für Solarmodule gemäß einer Ausführungsform;
- Figuren 3 bis 7: verschiedene Ansichten einer Schwenkeinheit gemäß einer ersten Ausführungsform;
- Figur 8: eine Explosionsdarstellung der in den Figuren 3 bis 7 gezeigten Schwenkeinheit;
- Figur 9: eine vergrößerte Ansicht des in Figur 8 mit IX gekennzeichneten Ausschnitts;
- Figur 10: eine weitere Explosionsdarstellung der in den Figuren 3 bis 9 gezeigten Schwenkeinheit;
- Figur 11: eine vergrößerte Ansicht des in Figur 10 mit XI gekennzeichneten Ausschnitts;
- Figuren 12 bis 14: verschiedene Ansichten eines Antriebsbogens der in den Figuren 3 bis 11 gezeigten Schwenkeinheit;
- Figuren 15 bis 17: verschiedene Ansichten einer Antriebseinrichtung der in den Figuren 3 bis 11 gezeigten Schwenkeinheit;
- Figuren 18 bis 22: verschiedene Anschichten einer Schwenkeinheit gemäß einer zweiten Ausführungsform der Erfindung;
- Figur 23: eine Explosionsdarstellung der in den Figuren 18 bis 22 gezeigten Schwenkeinheit;
- Figur 24: eine vergrößerte Ansicht des in Figur 23 mit XXIV gekennzeichneten Ausschnitts;
- Figur 25: eine weitere Explosionsdarstellung der in den Figuren 18 bis 23 gezeigten Schwenkeinheit;
- Figur 26: eine vergrößerte Ansicht des in Figur 25 mit XXVI gekennzeichneten Ausschnitts;
- Figuren 27 bis 33: verschiedene Ansichten einer Antriebseinrichtung der in den Figuren 18 bis 26 gezeigten Schwenkeinheit;
- Figuren 34 bis 37: perspektivische Ansichten einer Schwenkeinheit gemäß einer dritten Ausführungsform der Erfindung im an einem Pfosten angebrachten Zustand;
- Figuren 38 bis 41: verschiedene Seitenansichten der Schwenkeinheit gemäß der dritten Ausführungsform der Erfindung im an einem Pfosten angebrachten Zustand; und
- Figur 42: eine perspektivische Ansicht der Antriebseinrichtung gemäß der dritten Ausführungsform der Erfindung.

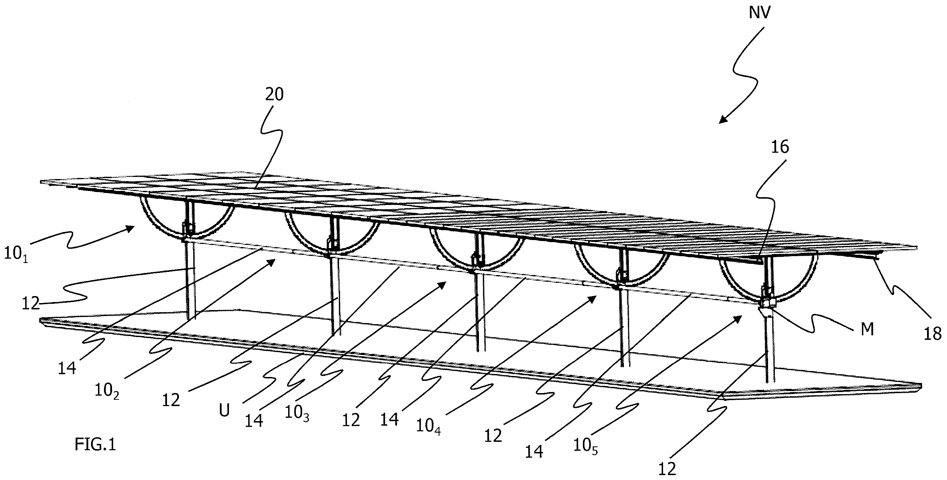

Figur 1 zeigt eine perspektivische Ansicht einer Nachführvorrichtung für Solarmodule. Die Nachführvorrichtung ist allgemein mit NV bezeichnet. Die Nachführvorrichtung NV weist mehrere Schwenkeinheiten 10₁ bis 10₅ auf. Jede der Schwenkeinheiten 10₁ bis 10₅ ist mit einem im Untergrund U verankerten Pfosten 12 verbunden. Die Schwenkeinheiten 10₁ bis 10₅ sind untereinander über die Antriebswellen 14 miteinander verbunden. Die Antriebswellen 14 werden von einem Motor M angetrieben, der in Figur 1 an der Schwenkeinheit 10₅ angeordnet ist. Auf diese Weise können mehrere Schwenkeinheiten 10₁ bis 10₅ mit einem einzigen Antrieb angetrieben werden. Die Schwenkeinheiten 10₁ bis 10₅ sind ferner untereinander über Tragschienen 16 und 18 verbunden, an denen Solarmodule 20 mit Hilfe von Befestigungselementen angebracht werden können. Zum Ausrichten der Solarmodule 20 nach der Sonne werden die Schwenkeinheiten 10₁ bis 10₅ über die Antriebswellen 14 angetrieben, wodurch die Schwenkeinheiten 10₁ bis 10₅ die daran angebrachten Solarmodule 20 verschwenken können.

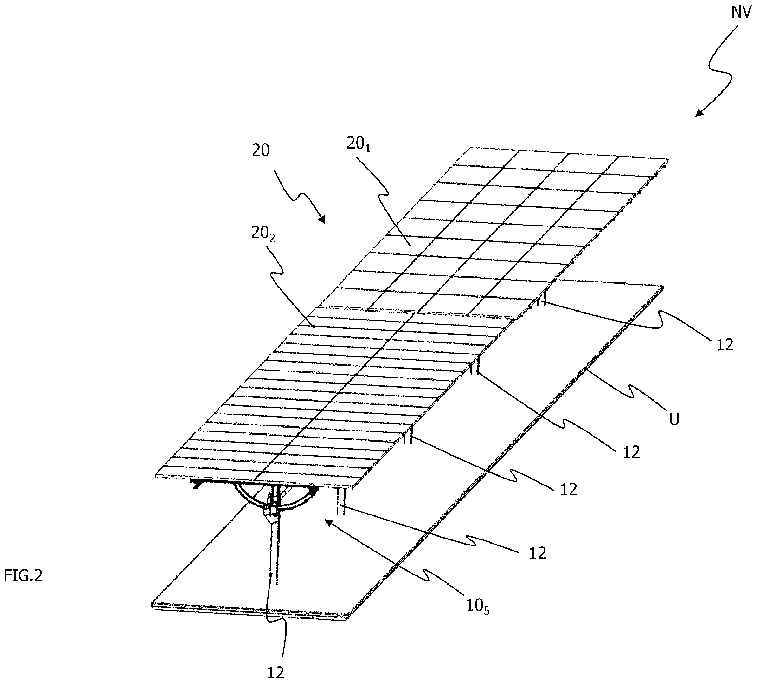

Figur 2 zeigt eine weitere perspektivische Ansicht der Nachführvorrichtung NV, in der die Solarmodule 20 und die an einem Pfosten 12 angeordnete Schwenkeinheit 10₅ sowie die Pfosten 12 der weiteren Schwenkeinheiten 10₁ bis 10₄ gezeigt sind. An der Nachführvorrichtung NV können Solarmodule 20 mit unterschiedlichen Formen, Größen, Ausrichtungen und auch Solarmodule 20 verschiedener Konstruktionsarten angebracht werden, wie in Figur 2 durch die unterschiedlich dargestellten Solarmodule 20₁ und 20₂ veranschaulicht wird.

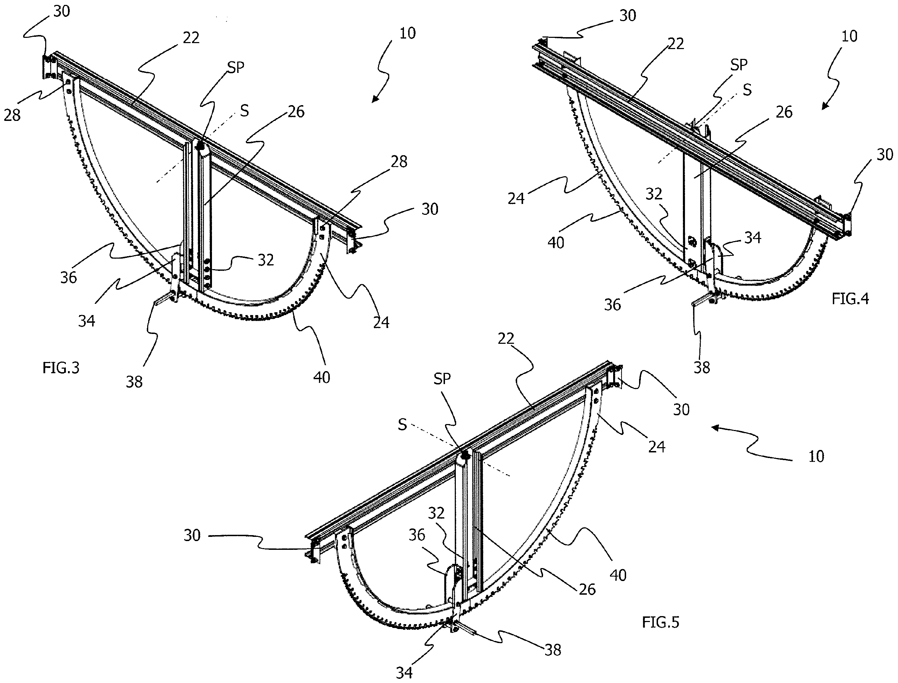

Die Figuren 3 bis 5 zeigen verschiedene perspektivische Ansichten einer Schwenkeinheit 10 gemäß einer ersten Ausführungsform. Die Schwenkeinheit 10 weist einen Querträger 22, einen an dem Querträger 22 angebrachten Antriebsbogen 24 und ein Trägerelement 26 auf.

Der Querträger 22 und das Trägerelement 26 sind verschwenkbar miteinander verbunden. Durch den Querträger 22 und das Trägerelement 26 erstreckt sich eine Schwenkachse S. Die Schwenkachse S erstreckt sich durch den an der Verbindungsstelle zwischen dem Querträger 22 und dem Trägerelement 26 gebildeten Schwenkpunkt SP.

Der Antriebsbogen 24 ist über Befestigungsmittel 28 wie zum Beispiel Schrauben oder Bolzen mit dem Querträger 22 verbunden. An den Enden des Querträgers 22 sind Verbindungselemente 30 erkennbar. Über die Verbindungselemente 30 kann der Querträger 22 mit den in Figur 1 gezeigten Tragschienen 16 und 18 verbunden werden.

Das Trägerelement 26 kann mit seinem der Schwenkachse S entgegengesetzten Ende 32 mit einem im oder am Untergrund verankerbaren Pfosten 12 (siehe Figur 1) verbunden werden. An dem Ende 32 des Trägerelements 26 sind ferner Befestigungselemente 34 und 36 angebracht. Über die Befestigungselemente 34 und 36 ist die Antriebseinrichtung 38 mit dem Trägerelement 26 verbunden. Die Antriebseinrichtung 38 dient zum Verschwenken in eine neue Schwenkstellung und Halten des Antriebsbogens 24 in einer eingestellten Position. Das Verschwenken des Antriebsbogens kann schrittweise erfolgen. Dazu steht die Antriebseinrichtung 38 mit einer Antriebskontur 40 an dem Antriebsbogen 24 in Eingriff. Die Antriebskontur 40 ist in radialer Richtung außen an dem Antriebsbogen 24 ausgebildet.

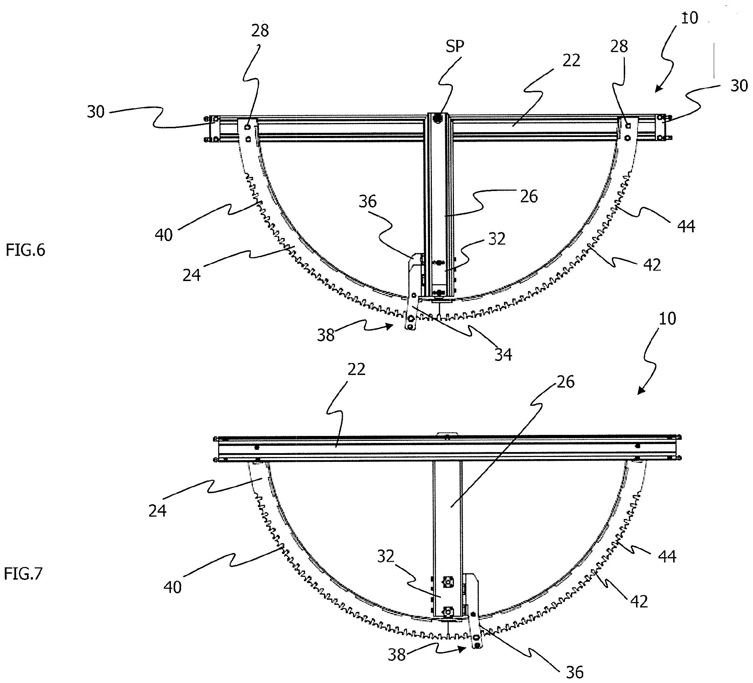

Die Figuren 6 und 7 zeigen zwei Ansichten der Schwenkeinheit 10 aus entgegengesetzten Blickrichtungen. In den Figuren 6 und 7 sind der Querträger 22, der Antriebsbogen 24 und das Trägerelement 26 gezeigt. In der Ausgangstellung bzw. der Montagestellung der Schwenkeinheit 10, d.h. der Querträger 22 wurde nicht relativ zu dem Trägerelement 26 um den Schwenkpunkt SP verschwenkt, erstreckt sich das Trägerelement 26 senkrecht zu dem Querträger 22. Der Schwenkpunkt SP ist in der Mitte des Querträgers 22 ausgebildet. An den Enden des Querträgers 22 sind die Verbindungselemente 30 gezeigt, die zum Verbinden des Querträgers 22 mit den Tragschienen 16 und 18 (siehe Figur 1) dienen.

An dem Ende 32 des Trägerelements 26, das dem Schwenkpunkt SP entgegengesetzt ist, sind die Befestigungselemente 34 und 36 mit dem Trägerelement 26 verbunden. Die Antriebseinrichtung 38 ist an den Befestigungselementen 34 und 36 drehbar gelagert. Die Befestigungselemente 34 und 36 halten die Antriebseinrichtung 38 an dem Trägerelement 26. Die Antriebseinrichtung 38 steht in Eingriff mit der Antriebskontur 40 an dem Antriebsbogen 24. Die Antriebskontur 40 weist zwei verschiedene Arten von Ausnehmungen auf. Die Antriebskontur 40 weist Antriebsausnehmungen 42 und Halteausnehmungen 44 auf, die in Richtung des Umfangs des Antriebsbogens 24 wechselweise angeordnet sind. Wenn die Antriebseinrichtung 38 in die Antriebsausnehmungen 42 eingreift, wird der Antriebsbogen 24 und der damit verbundene Querträger 22 bewegt. Greift die Antriebseinrichtung 38 in die Halteausnehmungen 44 ein, kann der Antriebsbogen 24 und der damit verbundene Querträger 22 in seiner eingestellten Stellung gehalten werden. Die Antriebseinrichtung 38 kann im Eingriff mit einer der Halteausnehmungen 44 auch ihre Stellung ändern, um in die nächste Antriebsausnehmung 42 eingreifen zu können. Dabei wird keine Torsionslast auf die Antriebswelle 14 übertragen. Auf die Antriebskontur 40 und die Antriebseinrichtung 38 wird im weiteren Verlauf dieser Beschreibung noch näher eingegangen.

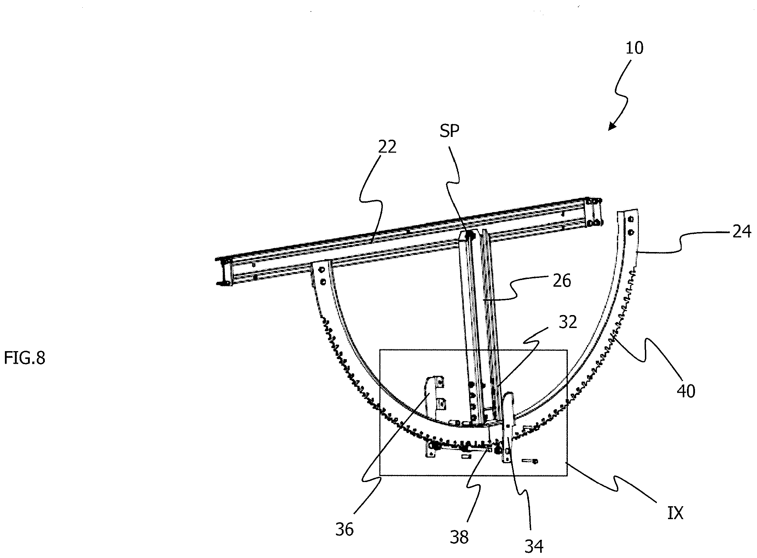

Figur 8 zeigt eine perspektivische Explosionsdarstellung der Schwenkeinheit 10. In Figur 8 sind der Querträger 22, der Antriebsbogen 24, das Trägerelement 26, die Antriebseinrichtung 38 und die beiden Befestigungselemente 34 und 36 gezeigt.

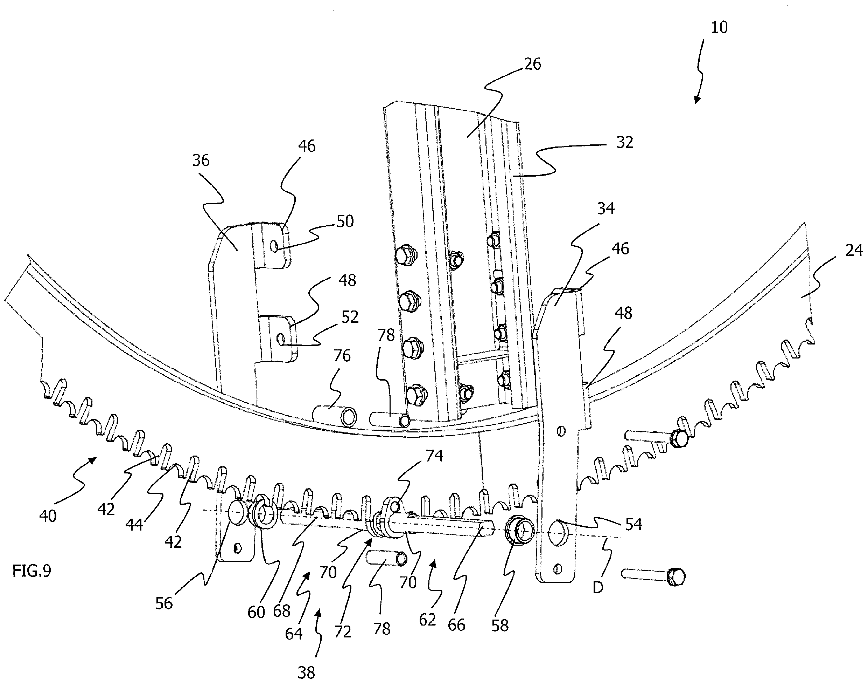

Figur 9 zeigt eine vergrößerte Ansicht des in Figur 8 mit IX gekennzeichneten Ausschnitts. In Figur 9 sind das Ende 32 des Trägerelements 26, die beiden Befestigungselemente 34 und 36 und ein Abschnitt des Antriebsbogens 24 gezeigt.

Die Befestigungselemente 34 und 36 weisen jeweils zwei Befestigungsabschnitte 46 und 48 auf. Die Befestigungsabschnitte 46 und 48 verlaufen abgewinkelt zum Hauptkörper der Befestigungselemente 34 und 36. Jeder Befestigungsabschnitt 46 und 48 hat eine Öffnung 50, 52. Die Öffnungen 50, 52 sind in Figur 9 nur an dem Befestigungselement 36 erkennbar. Mit diesen Befestigungsabschnitten 46 und 48 werden die Befestigungselemente 34 und 36 mit dem Trägerelement 26 verbunden.

Die Befestigungselemente 34 und 36 weisen jeweils eine Lageröffnung 54 und 56 auf, in der die Antriebseinrichtung 38 gelagert werden kann. Zur Lagerung der Antriebseinrichtung 38 in den Öffnungen 54 und 56 sind Lagerbuchsen 58 und 60 vorgesehen, die in den Öffnungen 54 und 56 aufgenommen werden. Die Antriebseinrichtung 38 weist zwei Kopplungselemente 62 und 64 auf. Die Kopplungselemente 62 und 64 sind stabförmig ausgebildet. Die Kopplungselemente 62 und 64 können abschnittsweise in den Öffnungen 54, 56 bzw. in den in den Öffnungen 54, 56 angeordneten Lagerbuchsen 58, 60 aufgenommen werden. Die Kopplungselemente 62 und 64 weisen jeweils einen Kopplungsabschnitt 66, 68 und einen Lagerabschnitt 70 auf. Die Kopplungsabschnitte 66 und 68 sind mit einem Querschnitt versehen, der zur Kopplung mit einer Antriebswelle 14 (siehe Figur 1) geeignet ist. Zwischen den Kopplungselementen 62 und 64 ist der Antriebsabschnitt 72 der Antriebseinrichtung 38 ausgebildet, in dem das Antriebselement 74 vorgesehen ist. Das Antriebselement 74 greift in die Antriebskontur 40 des Antriebsbogens 24 ein. Im Antriebsabschnitt 72 ist ein Halteelement vorgesehen, das in Figur 9 nicht gezeigt ist. Auf das Halteelement wird im weiteren Verlauf dieser Beschreibung im Detail eingegangen.

Die Schwenkeinheit 10 weist eine Führungselement 76 auf, welches eine Führungseinrichtung zur radialen Führung des Antriebsbogens 24 bildet. An dem Führungselement 76 kann sich der Antriebsbogen 24 in radialer Richtung abstützen. Das Führungselement 76 verhindert somit, dass sich der Antriebsbogen 24 in radialer Richtung aus dem Eingriff mit der Antriebseinrichtung 38 lösen kann. Das Führungselement 76 ist an einem Distanzstück bzw. Lagerelement 78 gelagert. Das Lagerelement 78 ist an einer Schraube angeordnet, die sich zwischen den Befestigungselementen 34 und 36 erstreckt. Der Antriebsbogen 24 verläuft zwischen den beiden Befestigungselementen 34 und 36. Die Befestigungselemente 34 und 36 werden über Schrauben miteinander verbunden. Um einen vorbestimmten Abstand zwischen den beiden Befestigungselementen 34 und 36 festzulegen und einzuhalten, sind die Distanzstücke 78 vorgesehen, durch die sich die Schrauben erstrecken.

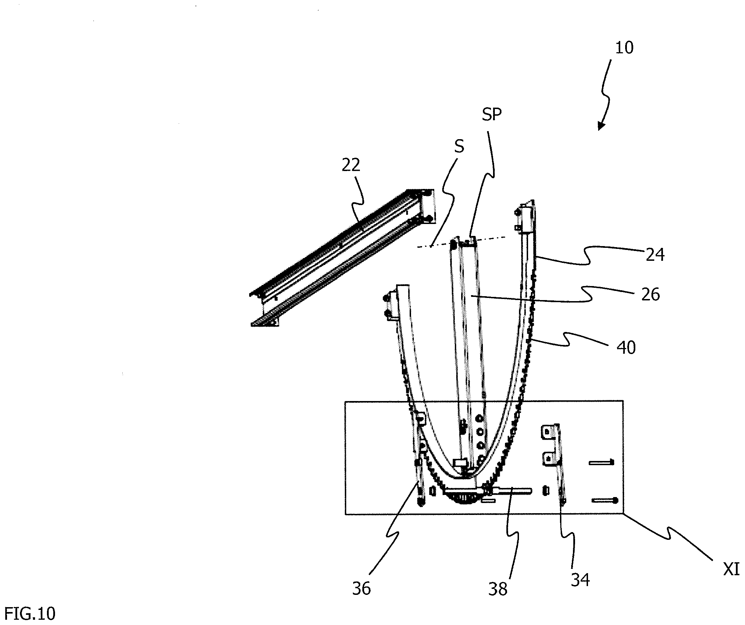

Figur 10 zeigt eine perspektivische Explosionsdarstellung der Schwenkeinheit 10. In Figur 10 sind der Querträger 22, der Antriebsbogen 24, das Trägerelement 26, die Antriebseinrichtung 38 und die beiden Befestigungselemente 34 und 36 gezeigt.

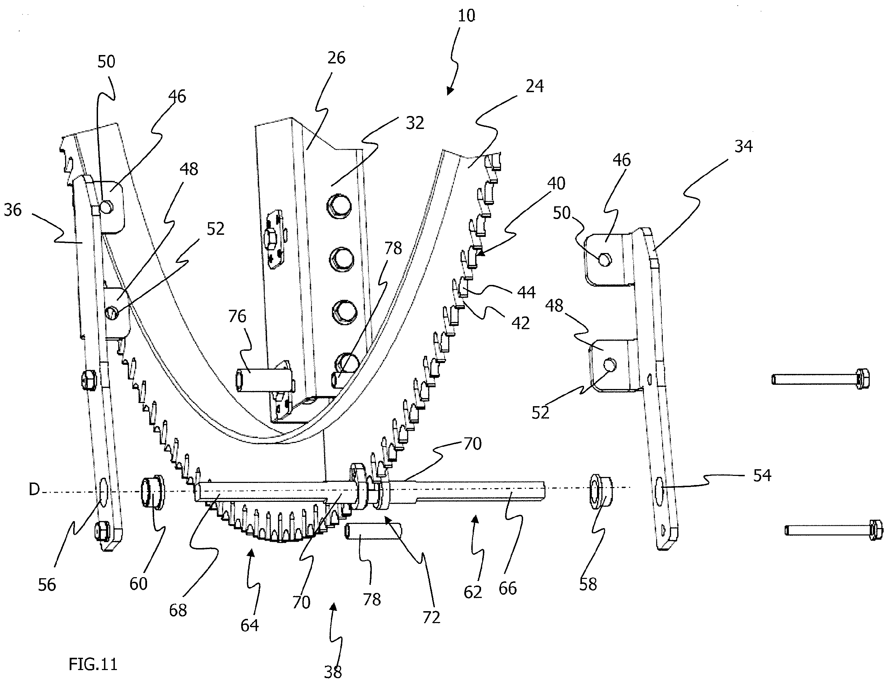

Figur 11 zeigt eine vergrößerte Ansicht des in Figur 10 mit XI gekennzeichneten Ausschnitts. In Figur 11 sind die Antriebseinrichtung 38, die mit der Antriebskontur 40 des Antriebsbogens 24 in Eingriff steht, die Befestigungselemente 34 und 36 sowie das Ende 32 des Trägerelements 26 gezeigt.

Die Antriebseinrichtung 38 weist zwei Kopplungselemente 62 und 64 auf, die sich ausgehend von dem Antriebsabschnitt 72 in entgegengesetzter Richtung erstrecken. An den Antriebsabschnitt 72 schließen sich in Richtung der Drehachse D die Lagerabschnitte 70 der Kopplungselemente 62 und 64 an. Auf die Lagerabschnitte 70 folgen in Richtung der Drehachse D die Kopplungsabschnitte 66 und 68 mit ihrem zur Kopplung mit einer Antriebswelle 14 ausgebildeten Querschnitt. Im montierten Zustand der Schwenkeinheit 10 erstrecken sich die Kopplungselemente 62 und 64 durch die Öffnungen 54 und 56 und durch die in den Öffnungen 54 und 56 angeordneten Lagerbuchsen 58 und 60.

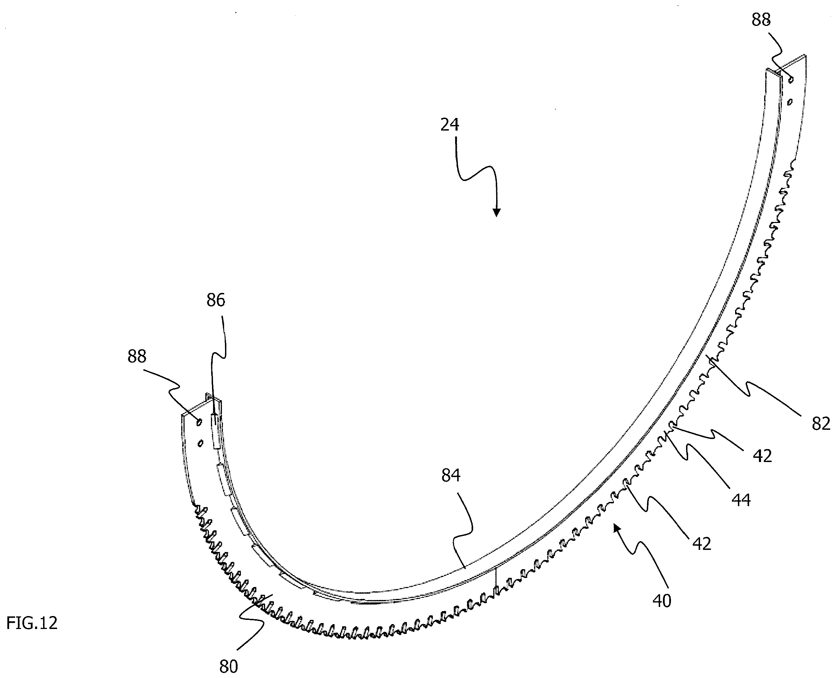

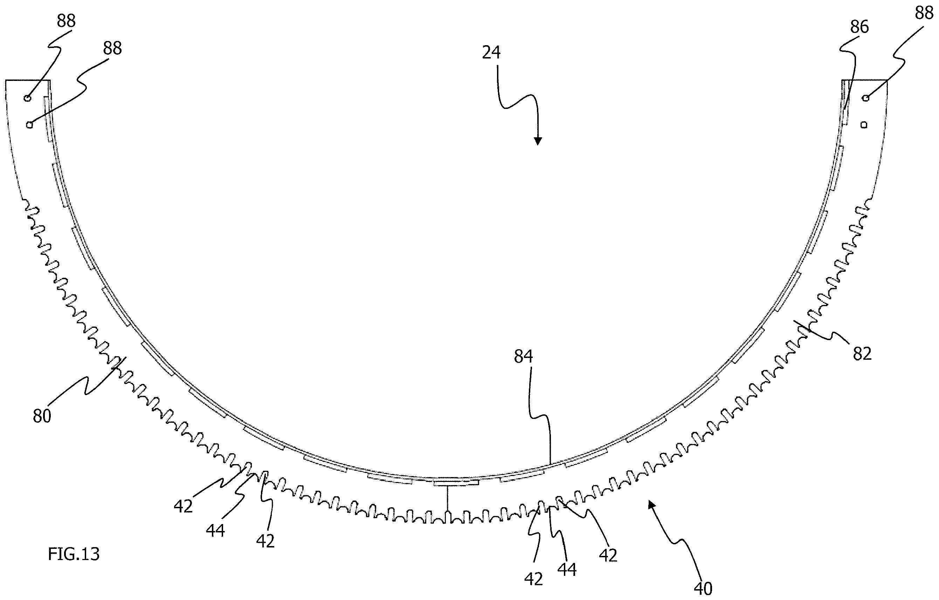

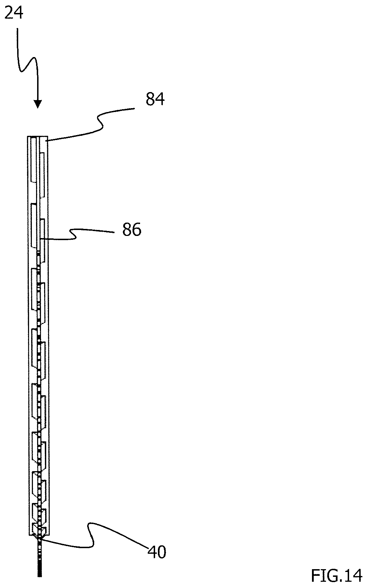

Die Figuren 12 bis 14 zeigen verschiedene Ansichten des Antriebsbogens 24. Der Antriebsbogen 24 setzt sich aus zwei Teilbögen 80 und 82 zusammen, die mit einem bogenförmigen Basiselement 84 verbunden sind. Die Teilbögen 80 und 82 können mit dem Basiselement 84 verschweißt sein, wie durch die dargestellten Schweißnähte 86 ersichtlich wird. Im Querschnitt betrachtet weist der Antriebsbogen 24 durch das Basiselement 84 einen im Wesentlichen T-förmigen Querschnitt auf. Ausgehend von diesem Basiselement 84 erstrecken sich die Teilbögen 80, 82 in radialer Richtung. Die Teilbögen 80, 82 weisen jeweils zwei Öffnungen 88 auf, über die der Antriebsbogen 24 mit dem Querträger 22 verbunden werden kann.

Die Antriebskontur 40 weist Antriebsausnehmungen 42 und Halteausnehmungen 44 auf. Die Antriebsausnehmungen 42 und die Halteausnehmungen 44 sind in Umfangsrichtung des Antriebsbogens 24 wechselweise angeordnet. Die Antriebsausnehmungen 42 sind radiale Einschnitte in dem Antriebsbogen 24. Die Antriebsausnehmungen 42 können auch als schlitzförmig bezeichnet werden. Die zwischen den Antriebsausnehmungen 42 bzw. den Einschnitten gebildeten Abschnitte des Antriebsbogens 24 sind mit Halteausnehmungen 44 versehen. Die Halteausnehmungen 44 sind gewölbt bzw. gekrümmt ausgebildet. Die Halteausnehmungen 44 sind im Wesentlichen halbkreisförmig. Die Antriebsausnehmungen 42 erstrecken sich in radialer Richtung weiter in den Antriebsbogen 24 hinein als die Halteausnehmungen 44.

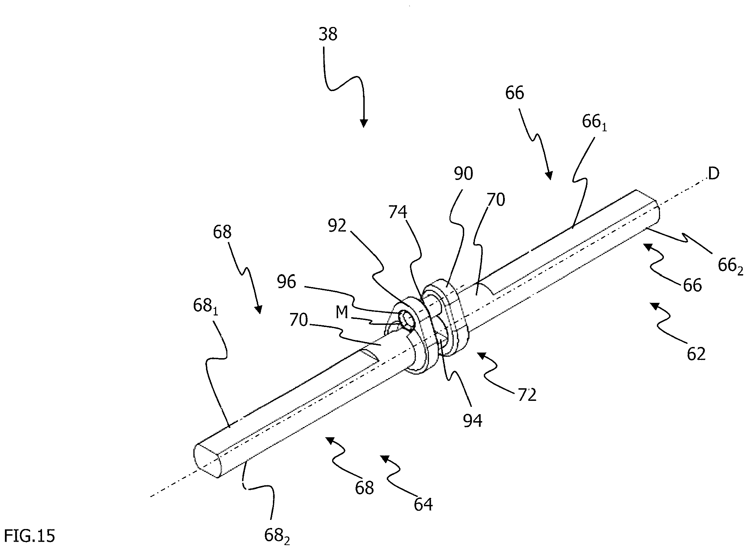

Figur 15 zeigt eine perspektivische Ansicht der Antriebseinrichtung 38. Die Antriebseinrichtung 38 ist um die Drehachse D drehbar, die der Längsachse der Antriebseinrichtung 38 entspricht. Die Antriebseinrichtung 38 weist einen Antriebsabschnitt 72 und zwei Kopplungselemente 62 und 64 auf. Die Kopplungselemente 62 und 64 haben jeweils einen Lagerabschnitt 70 und einen Kopplungsabschnitt 66 und 68. Die Kopplungsabschnitte 66 und 68 haben einen Querschnitt, der zur Kopplung mit einer Antriebswelle 14 (siehe Figur 1) geeignet ist. Dieser Querschnitt wird durch Abflachungen 66₁, 66₂ und 68₁, 68₂ im Bereich der Kopplungsabschnitte 66 und 68 gebildet. Die Kopplungsabschnitte 66 und 68 können beispielsweise in einer Antriebswelle 14 mit einer zu dem Querschnitt der Kopplungsabschnitte 66 und 68 komplementären Ausnehmung aufgenommen werden. Ausgehend von dem Antriebsabschnitt 72 erstrecken sich die Kopplungselemente 62 und 64 in entgegengesetzter Richtung.

Der Antriebsabschnitt 72 weist neben dem Antriebselement 74 zwei Verbindungselemente 90 und 92 auf, die die Kopplungselemente 62 und 64 mit dem Antriebselement 74 verbinden. Die Verbindungselemente 90 und 92 können einstückig mit den Kopplungselementen 62 und 64 ausgebildet sein. Die Verbindungselemente 90 und 92 sind nockenförmig ausgebildet. Ferner weist der Antriebsabschnitt 72 ein Halteelement 94 auf. Das Antriebselement 74 und das Halteelement 94 erstrecken sich zwischen den beiden Verbindungselementen 90 und 92. Das Halteelement 94 ist halbkreissektorförmig ausgebildet und koaxial mit den Kopplungselementen 62 und 64 angeordnet. Das Antriebselement 74 ist exzentrisch angeordnet. Die Längsachse M des Antriebselements 74 erstreckt sich parallel aber in radialer Richtung versetzt zu der Drehachse D der Antriebseinrichtung 38. Das Antriebselement 74 kann stabförmig ausgebildet sein. Das Antriebselement 74 wird in Öffnungen 96 in den Verbindungselementen 90 und 92 aufgenommen.

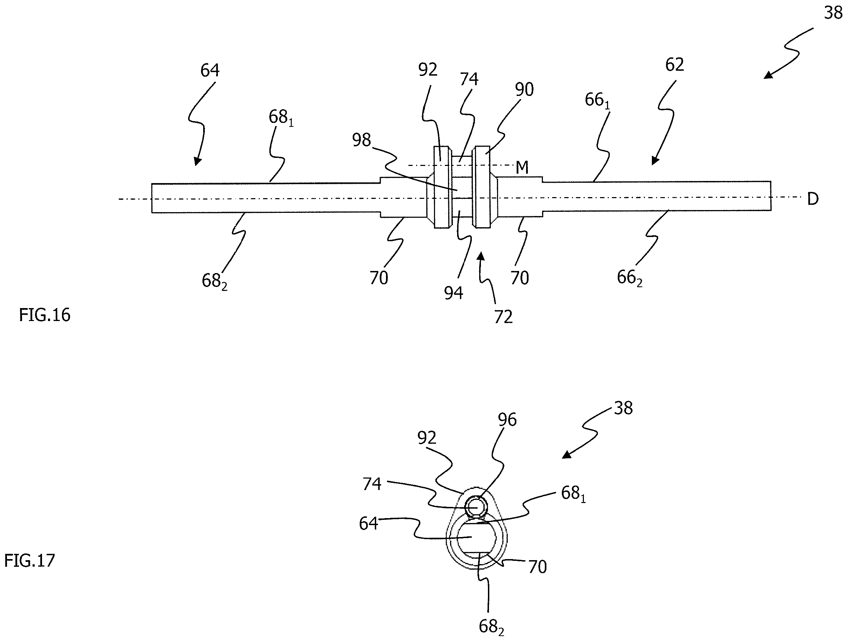

Figur 16 zeigt eine Vorderansicht der Antriebseinrichtung 38. Die Lagerabschnitte 70 der Kopplungselemente 62 und 64 haben einen kreisförmigen Querschnitt. Am Übergang zwischen den Lagerabschnitten 70 und den Kopplungsabschnitten 66 und 68 mit ihren Abflachungen 66₁, 66₂ und 68₁, 68₂ ist eine Stufe erkennbar. Zwischen den beiden Verbindungselementen 90 und 92 erstrecken sich das Antriebselement 74 und das Halteelement 94. Das Antriebselement 74 ist exzentrisch angeordnet. Das Antriebselement 74 erstreckt sich in radialer Richtung versetzt parallel zur Drehachse D. Zwischen dem Antriebselement 74 und dem Halteelement 94 ist ein Freiraum 98 erkennbar. Das Halteelement 94 weist eine halbkreisförmige Außenkontur auf, deren Außenfläche sich bei dieser Ausführungsform auf dem selben Radius wie die Außenumfangsflächen der Lagerabschnitte 70 der Kopplungselemente 62 und 64 um die Drehachse D der Antriebseinrichtung 38 erstreckt.

Figur 17 zeigt eine Seitenansicht der Antriebseinrichtung 38, in der das Kopplungselement 64, das Verbindungselement 92 und das Antriebselement 74 gezeigt sind. Das Verbindungselement 92 ist nockenförmig ausgebildet. In dem Verbindungselement 92 ist eine Öffnung 96 ausgebildet, in der das Antriebselement 74 aufgenommen ist.

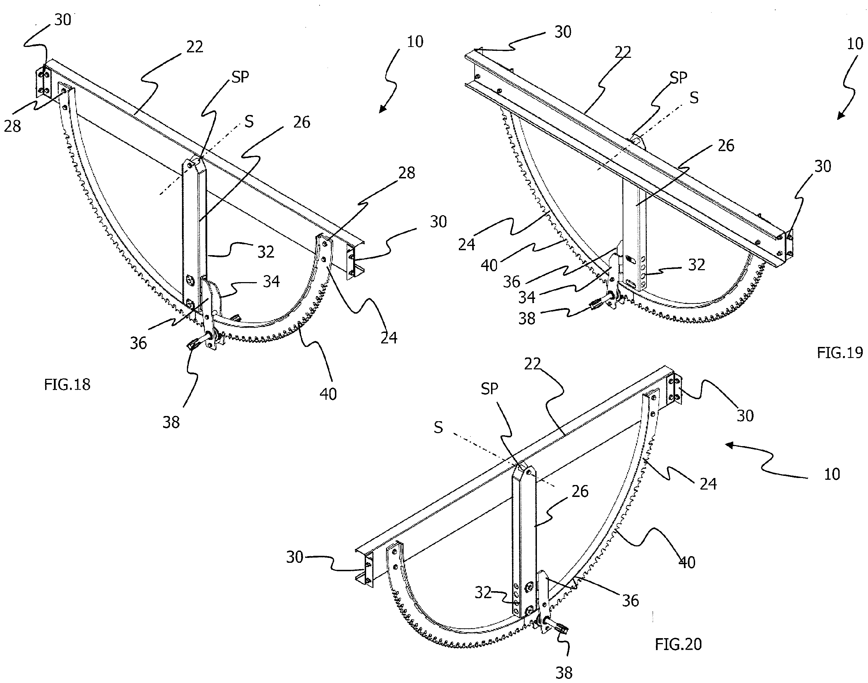

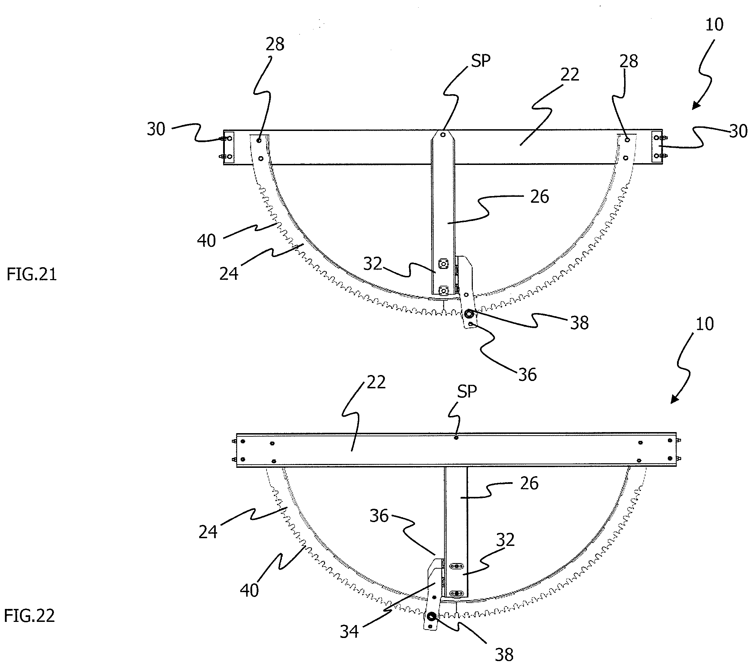

Die im Folgenden beschriebenen Figuren 18 bis 33 zeigen eine Schwenkeinheit 10 gemäß einer zweiten Ausführungsform. Für gleichartige oder gleichwirkende Merkmale oder Komponenten werden die selben Bezugszeichen wie bei der ersten Ausführungsform verwendet. Zur Vermeidung von Wiederholungen werden im Folgenden die Unterschiede zwischen den beiden Ausführungsformen im Detail beschrieben. Komponenten und Merkmale, die bereits bezüglich der ersten Ausführungsform im Detail beschrieben wurden, werden nicht erneut detailliert beschrieben. Die Beschreibung dieser Komponenten und Merkmale gilt analog auch für die zweite Ausführungsform.

Die Figuren 18 bis 22 zeigen verschiedene Ansichten einer Schwenkeinheit 10 gemäß der zweiten Ausführungsform. Die Schwenkeinheit 10 weist einen Querträger 22, einen an dem Querträger 22 angebrachten Antriebsbogen 24 und ein Trägerelement 26 auf. Der Antriebsbogen 24 ist über Befestigungsmittel 28 mit dem Querträger 22 verbunden. An den Enden des Querträgers 22 sind Verbindungselemente 30 angebracht, über die der Querträger 22 mit den Tragschienen 16 und 18 (Figur 1) verbunden werden kann.

Das Trägerelement 26 gemäß der zweiten Ausführungsform weist anders als bei der ersten Ausführungsform keinen C-förmigen Querschnitt auf, sondern ist im Querschnitt rechteckförmig ausgebildet. Eine Schwenkachse S erstreckt sich durch den an der Verbindungsstelle zwischen dem Querträger 22 und dem Trägerelement 26 gebildeten Schwenkpunkt SP.

Ferner ist bereits in den Figuren 18 bis 22 erkennbar, dass sich die Antriebseinrichtung 38 gemäß der zweiten Ausführungsform von der Antriebseinrichtung der ersten Ausführungsform unterscheidet. Auf die Antriebseinrichtung 38 und insbesondere auf die Unterschiede zu der Antriebseinrichtung gemäß der ersten Ausführungsform wird im weiteren Verlauf der Beschreibung im Detail eingegangen.

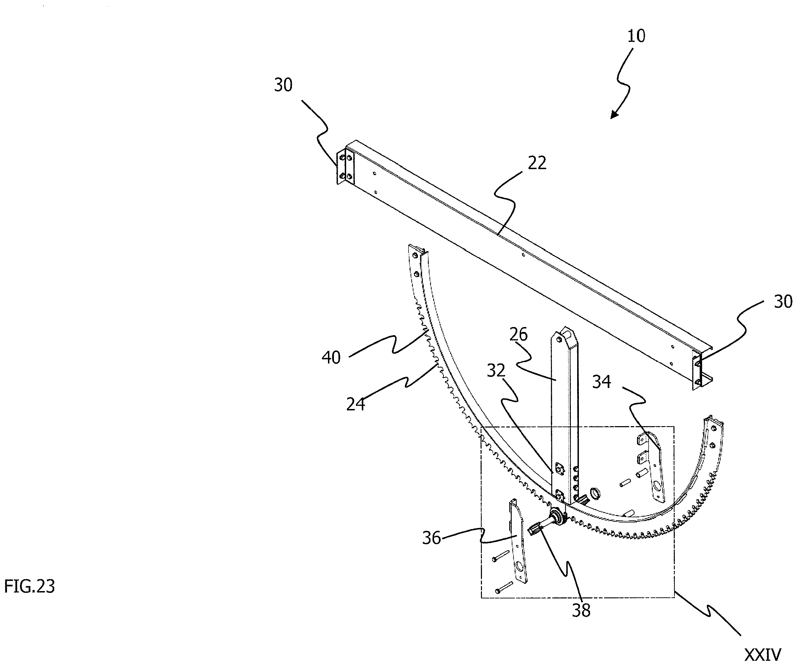

Figur 23 zeigt eine perspektivische Explosionsdarstellung der Schwenkeinheit 10. In Figur 23 sind der Querträger 22, der Antriebsbogen 24, das Trägerelement 26, die Antriebseinrichtung 38 und die beiden Befestigungselemente 34 und 36 gezeigt.

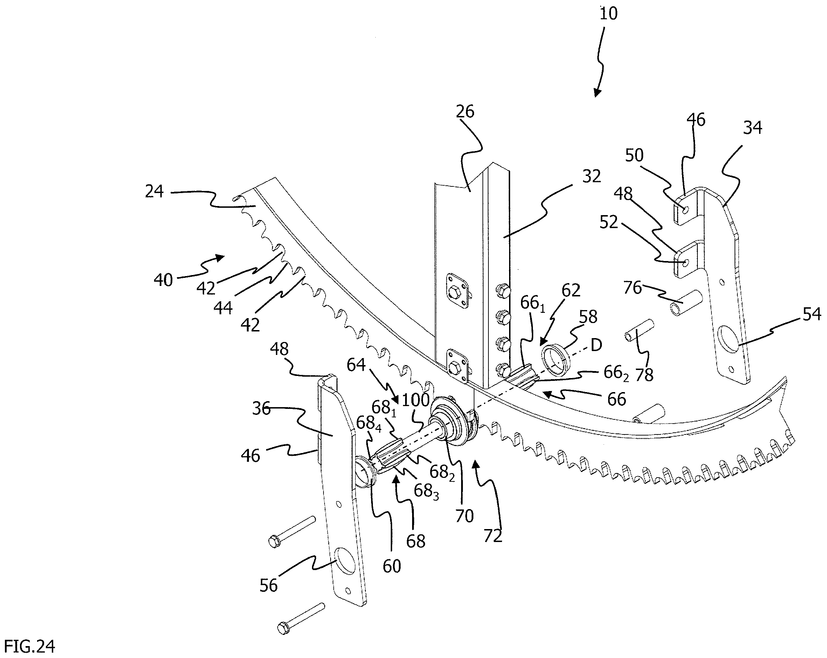

Figur 24 zeigt eine vergrößerte Ansicht des in Figur 23 mit XXIV gekennzeichneten Ausschnitts. In Figur 24 sind das Ende 32 des Trägerelements 26, die beiden Befestigungselemente 34 und 36 und ein Abschnitt des Antriebsbogens 24 gezeigt.

Die Antriebseinrichtung 38 weist zwei Kopplungselemente 62 und 64 auf. Die Kopplungselemente 62 und 64 weisen jeweils einen Kopplungsabschnitt 66, 68 und einen Lagerabschnitt 70 auf, wobei in Figur 24 nur der Lagerabschnitt 70 an dem Kopplungselement 64 erkennbar ist. Die Kopplungsabschnitte 66 und 68 weisen sich in radialer Richtung erstreckende Vorsprünge 66₁, 66₂, 66₃, 66₄ und 68₁, 68₂, 68₃, 68₄ auf, über die die Antriebseinrichtung 38 mit einer entsprechend ausgebildeten Antriebswelle 14 (siehe Figur 1) gekoppelt werden kann, wobei 66₃ und 66₄ in Figur 24 nicht ersichtlich sind. Die Kopplungsabschnitte 66 und 68 sind jeweils über einen stabförmigen Abschnitt 100 mit den Lagerabschnitten 70 verbunden. Zwischen den Kopplungselementen 62 und 64 ist der Antriebsabschnitt 72 der Antriebseinrichtung 38 vorgesehen, in dem das Antriebselement 74 und das Halteelement 94 ausgebildet sind. Das Antriebselement 74 und das Halteelement 94 greifen wechselweise in die Antriebskontur 40 des Antriebsbogens 24 ein.

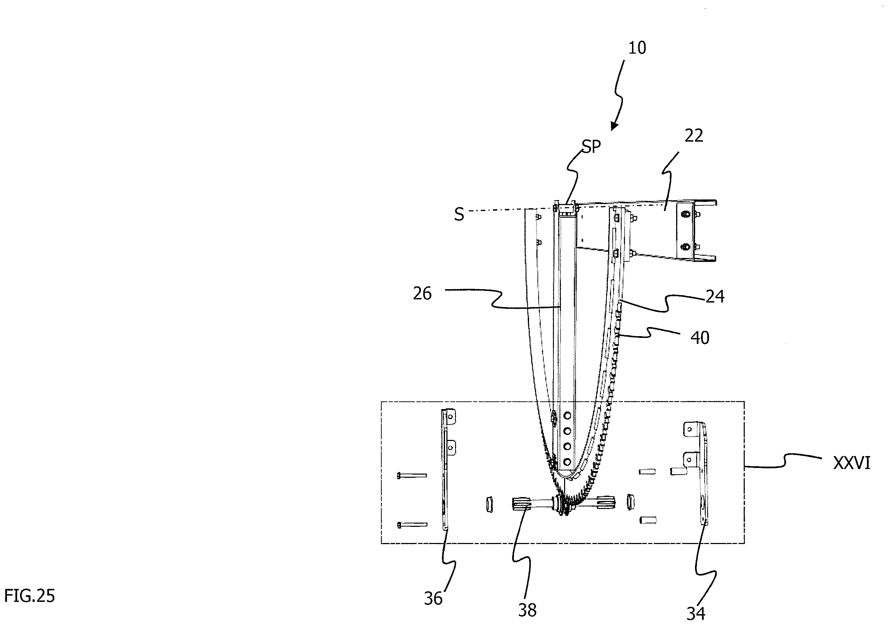

Figur 25 zeigt eine weitere perspektivische Explosionsdarstellung der Schwenkeinheit 10. In Figur 25 sind der Querträger 22, der Antriebsbogen 24, das Trägerelement 26, die Antriebseinrichtung 38 und die beiden Befestigungselemente 34 und 36 gezeigt.

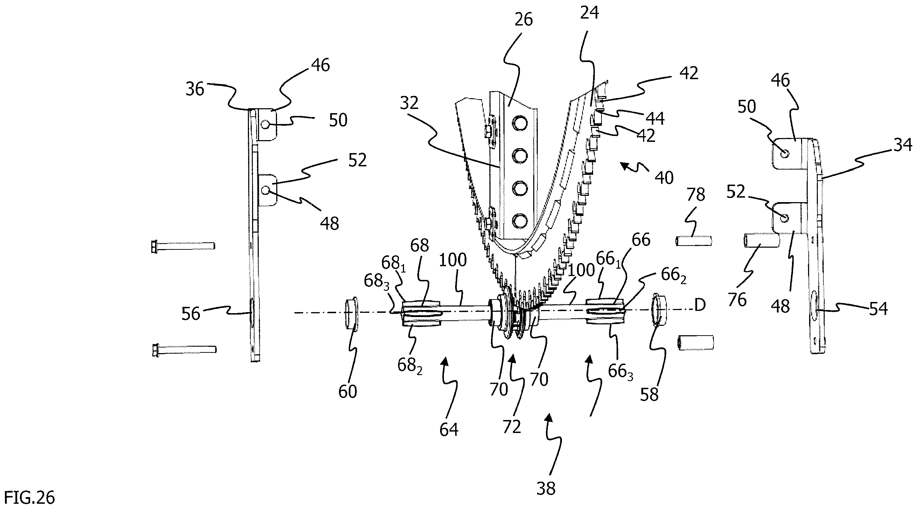

Figur 26 zeigt eine vergrößerte Ansicht des in Figur 25 mit XXVI gekennzeichneten Ausschnitts. In Figur 26 ist die Antriebseinrichtung 38, die mit der Antriebskontur 40 des Antriebsbogens 24 in Eingriff steht, die Befestigungselemente 34 und 36 sowie das Ende 32 des Trägerelements 26 gezeigt.

Die Antriebseinrichtung 38 weist zwei Kopplungselemente 62 und 64 auf, die sich ausgehend von dem Antriebsabschnitt 72 in entgegengesetzter Richtung erstrecken. An dem Antriebsabschnitt 72 schließen sich in Richtung der Drehachse D die Lagerabschnitte 70 der Kopplungselemente 62 und 64 an. Auf die Lagerabschnitte 70 folgen in Richtung der Drehachse D die Verbindungsabschnitte 100, die die Lagerabschnitte 70 mit den Kopplungsabschnitten 66 und 68 verbinden. Die Kopplungsabschnitte 66 und 68 bilden in axialer Richtung den Abschluss der Antriebseinrichtung 38. Im montierten Zustand der Schwenkeinheit 10 erstrecken sich die Kopplungselemente 62 und 64 durch die Öffnungen 54 und 56 und durch die in den Öffnungen 54 und 56 angeordneten Lagerbuchsen 58 und 60.

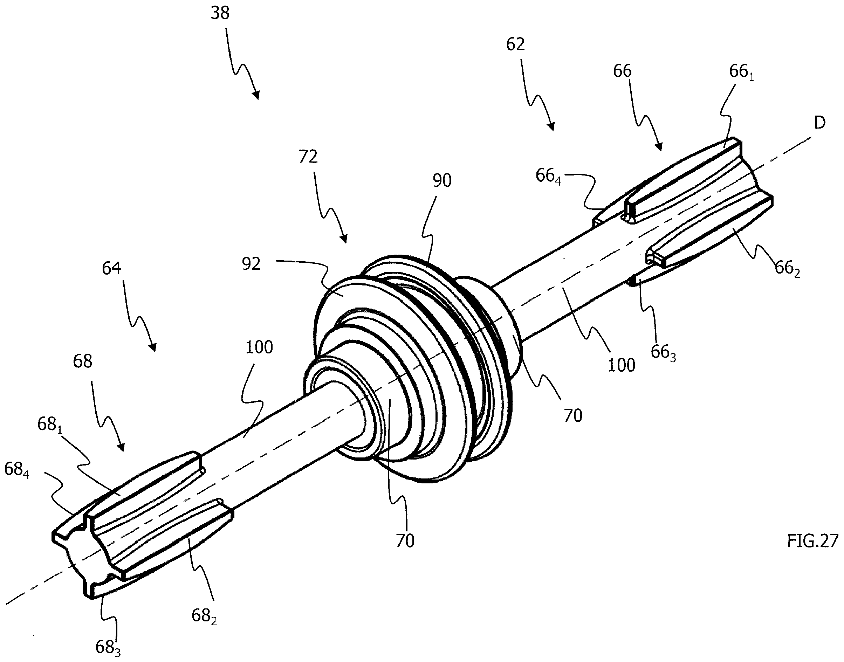

Figur 27 zeigt eine perspektivische Ansicht der Antriebseinrichtung 38. Die Antriebseinrichtung 38 ist um die Drehachse D drehbar, die der Längsachse der Antriebseinrichtung 38 entspricht. Die Antriebseinrichtung 38 weist einen Antriebsabschnitt 72 und zwei Kopplungselemente 62 und 64 auf. Die Kopplungselemente 62 und 64 haben jeweils einen Lagerabschnitt 70 und einen Kopplungsabschnitt 66 und 68. Die Kopplungsabschnitte 66 und 68 sind über die Verbindungsabschnitte 100 mit den Lagerabschnitten 70 verbunden. Die Kopplungsabschnitte 66 und 68 weisen die in radialer Richtung vorstehenden Vorsprünge 66₁, 66₂, 66₃, 66₄ und 68₁, 68₂, 68₃, 68₄ auf. Die Kopplungsabschnitte 66 und 68 können mit ihren Vorsprüngen 66₁, 66₂, 66₃, 66₄ und 68₁, 68₂, 68₃, 68₄ mit einer Antriebswelle 14 (siehe Figur 1) drehmomentübertragend gekoppelt werden. Die Kopplungsabschnitte 66 und 68 und ein Abschnitt der Antriebswelle 14 (siehe Figur 1) können komplementär ausgebildet sein. Die Kopplungsabschnitte 66 und 68 und der entsprechende Abschnitt einer Antriebswelle 14 können komplementär ausgebildet sein, sodass sie miteinander in Eingriff gebracht werden können. Die Kopplungsabschnitte 66 und 68 und/oder der Abschnitt der Antriebswelle 14 können derart ausgebildet, dass montagebedingte Abstandstoleranzen zwischen benachbarten Schwenkeinheiten 10 bzw. nebeneinander angeordneten Pfosten 12 in begrenztem Maße kompensiert werden. Beispielsweise können die Kopplungselemente 66 und 68 und die Antriebswelle derart ausgebildet sein, dass sie miteinander in Eingriff stehend in Richtung der Schwenkachse eine Verschiebung relativ zueinander zu lassen, um die genannten Toleranzen kompensieren zu können.

Der Antriebsabschnitt 72 weist zwei Verbindungselemente 90 und 92 auf. Die Verbindungselemente 90 und 92 können einstückig mit den Kopplungselementen 62 und 64 und/oder dem Antriebselement 74 und/oder dem Halteelement 94 ausgebildet sein. Die Verbindungselemente 90 und 92 sind scheibenförmig ausgebildet.

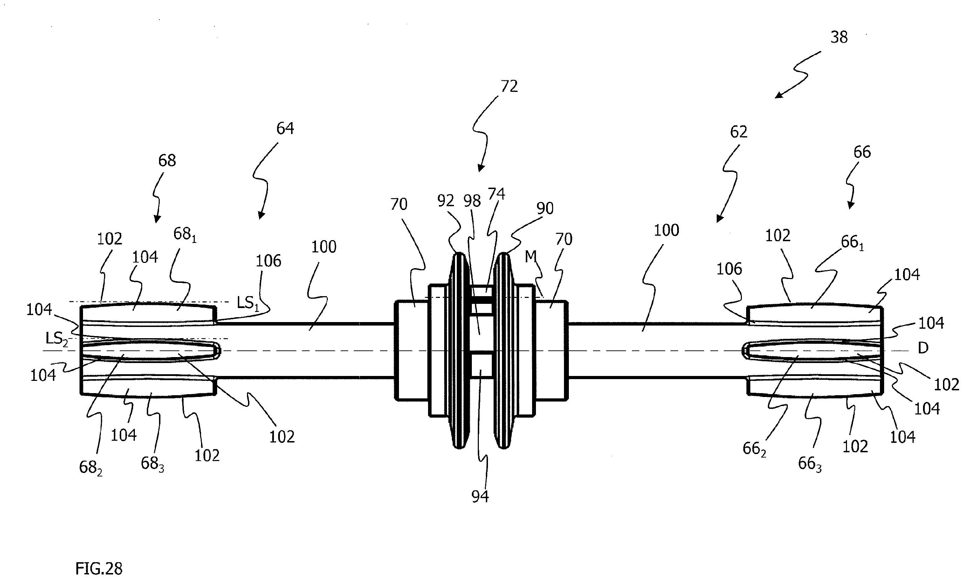

Figur 28 zeigt eine Vorderansicht der Antriebseinrichtung 38. Zwischen den scheibenförmigen Verbindungselementen 90 und 92 erstrecken sich das Antriebselement 74 und das Halteelement 94. Das Verbindungselement 74 ist exzentrisch angeordnet. Das Halteelement 94 weist eine halbkreisförmige Außenkontur auf. Die Antriebseinrichtung 38 ist um die Drehachse D drehbar. Die Drehachse D erstreckt sich durch den Mittelpunkt der halbkreisförmigen Außenkontur des Halteelements 94. Zwischen dem Antriebselement 74 und dem Halteelement 94 ist ein Freiraum 98 erkennbar. Das Halteelement 94 ist im Querschnitt in Form eines Kreissektors mit einer halbkreisförmigen Außenkontur (wird im Folgenden als "halbkreissektorförmig" bezeichnet) ausgebildet und koaxial mit den Kopplungselementen 62 und 64 angeordnet. Das Antriebselement 74 ist exzentrisch angeordnet. Die Längsachse M des Antriebselements 74 erstreckt sich parallel aber in radialer Richtung versetzt zu der Drehachse D der Antriebseinrichtung 38.

Die Kopplungsabschnitte 66 und 68 weisen die in radialer Richtung vorstehenden Vorsprünge 66₁, 66₂, 66₃, 66₄ und 68₁, 68₂, 68₃, 68₄ auf, die die Antriebseinrichtung 38 mit einer Antriebswelle 14 (siehe Figur 1) drehmomentübertragend koppeln können. Die Vorsprünge 66₄ und 68₄ sind in Figur 28 nicht gezeigt (siehe Figur 27). Die nachstehenden Ausführungen gelten analog auch für die Vorsprünge 66₄ und 68₄, die in Figur 28 nicht gezeigt sind. Die Vorsprünge 66₁, 66₂, 66₃ und 68₁, 68₂, 68₃ sind zum Ausgleich von Winkelversätzen zwischen der Antriebseinrichtung 38 und der Antriebswelle 14 ballig ausgebildet. Die Vorsprünge 66₁, 66₂, 66₃ und 68₁, 68₂, 68₃ weisen dazu eine gewölbte radiale Außenfläche 102 auf. Die Außenfläche 102 ist in Richtung der Drehachse D gewölbt. Die Wölbung wird durch die in Figur 28 eingetragene Linie LS₁ verdeutlicht, die sich parallel zur Drehachse D erstreckt. Weiterhin weisen die Vorsprünge 66₁, 66₂, 66₃ und 68₁, 68₂, 68₃ Seitenflächen 104 auf, die gewölbt sind und sich in radialer Richtung erstrecken. Die Seitenflächen 104 erstrecken sich in radialer Richtung zwischen der Außenfläche 102 und dem Fuß 106 des jeweiligen Vorsprungs 66₁, 66₂, 66₃ und 68₁, 68₂, 68₃. Der Fuß 106 der Vorsprünge 66₁, 66₂, 66₃ und 68₁, 68₂, 68₃ ist in Figur 28 aus Gründen der Übersichtlichkeit nur bei den Vorsprüngen 66₁ und 68₁ mit einem Bezugszeichen versehen. Die Seitenfläche 104 ist in Richtung der Drehachse D gewölbt, wie durch die in Figur 28 an einer der Seitenflächen 104 eingetragene Linie LS₂ angezeigt wird. Die Linie LS₂ erstreckt sich parallel zur Drehachse D. Durch die Wölbung der radialen Außenflächen 102 und die gewölbten Seitenflächen 104 der Vorsprünge 66₁, 66₂, 66₃, 66₄ und 68₁, 68₂, 68₃, 68₄ können Winkelversätze zwischen der Antriebseinrichtung 38 und der Antriebswelle 14 ausgeglichen werden.

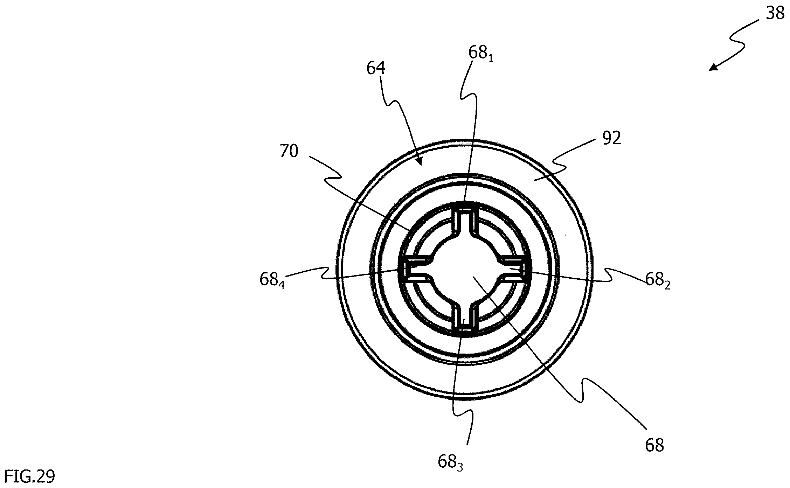

Figur 29 zeigt eine Seitenansicht der Antriebseinrichtung 38, in der das Kopplungselement 64, dessen Kopplungsabschnitt 68 und das Verbindungselement 92 gezeigt sind. Das Verbindungselement 92 ist scheibenförmig ausgebildet. Der Kopplungsabschnitt 68 weist die in radialer Richtung vorstehenden Vorsprünge 68₁, 68₂, 68₃, 68₄ auf. Die Vorsprünge 68₁, 68₂, 68₃, 68₄ sind um 90° zueinander versetzt angeordnet.

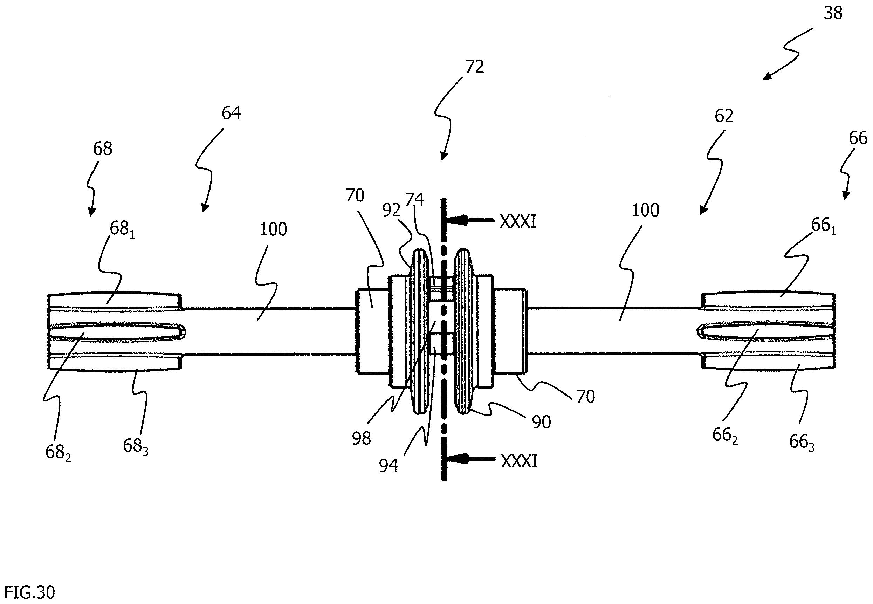

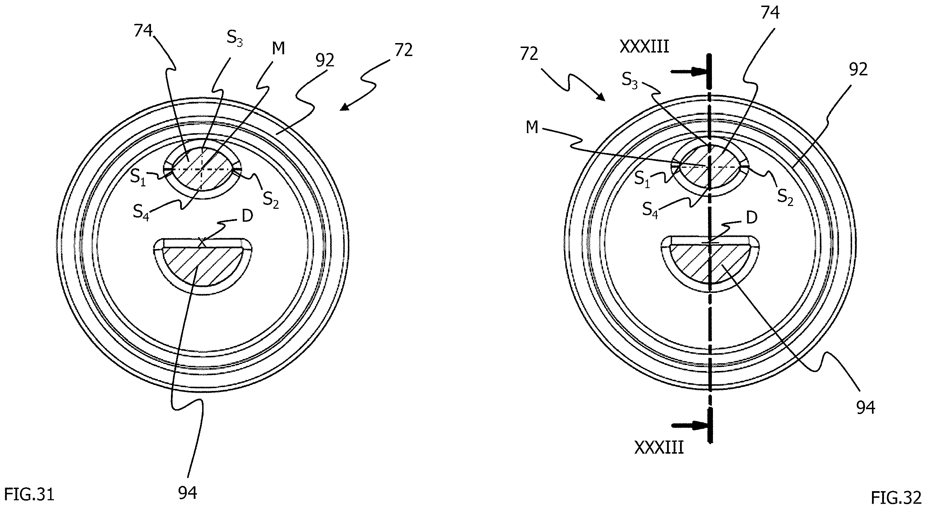

Figur 30 entspricht der Vorderansicht der Antriebseinrichtung 38 gemäß Figur 28, mit dem Unterschied, dass die Schnittlinie XXXI-XXXI eingetragen wurde. Figur 31 zeigt eine Schnittansicht entlang der Schnittlinie XXXI-XXXI in Figur 30. In Figur 31 sind das scheibenförmige Verbindungselement 92 das Antriebselement 74 und das Halteelement 94 gezeigt. Das Halteelement 94 ist im Querschnitt halbkreissektorförmig ausgebildet.

Das Antriebselement 74 weist einen von einem Kreisquerschnitt abweichenden und zumindest abschnittsweise gekrümmten Querschnitt auf. Der Querschnitt des Antriebselements 74 ist in radialer Richtung bezogen auf die Drehachse D verglichen mit einem Kreisquerschnitt reduziert ausgebildet. Der Querschnitt des Antriebselements 74 kann als oval oder auch ellipsenförmig bezeichnet werden. Wie in den Figuren 31 und 32 gekennzeichnet, hat der Querschnitt des Antriebselements 74 vier Scheitelpunkte S₁, S₂, S₃ und S₄. Zwischen den Scheitelpunkten S₁ und S₂ weist das Antriebselement 74 in einer Richtung quer zur radialen Richtung seine größte Erstreckung auf. Anders ausgedrückt legt der Abstand zwischen den Scheitelpunkten S₁ und S₂ die größte Erstreckung des Antriebselements 74 fest. Die Scheitelpunkte S₃ und S₄ liegen in radialer Richtung in einer Flucht. Der Abstand zwischen den Scheitelpunkten S₃ und S₄ ist kleiner als der Abstand zwischen den Scheitelpunkten S₁ und S₂. Durch den geringeren Abstand zwischen den in radialer Richtung in einer Flucht liegenden Scheitelpunkten S₃ und S₄ wird deutlich, dass der Querschnitt des Antriebselements 74 in radialer Richtung reduziert ist.

Durch den in radialer Richtung reduzierten Querschnitt des Antriebselements 74 kann der Eingriff des Antriebselements 74 in eine der Antriebsausnehmungen 42 sichergestellt werden, sodass die Funktion der Schwenkeinheit 10 dauerhaft gewährleistet werden kann. Mit dem in radialer Richtung reduzierten Querschnitt des Antriebselements 74 kann das Antriebselement 74 selbst dann sicher in die entsprechende Antriebsausnehmung 42 eingreifen, wenn sich der radiale Abstand zwischen der Antriebseinrichtung 38 und dem Antriebsbogen vergrößert hat. Es können insbesondere Toleranzschwankungen innerhalb der Schwenkeinheit 10 kompensiert werden. Sollte sich aufgrund von Toleranzschwankungen und/oder elastischer Deformation der radiale Abstand zwischen der Antriebseinrichtung 38 und dem Antriebsbogen 24 vergrößern, kann durch den ovalen Querschnitt des Antriebselements 74 das Antriebselement 74 selbst in diesem Fall noch sicher in die Antriebskontur 40 des Antriebsbogens 24 eingreifen.

Ferner kann sich der Abstand zwischen den gegenüberliegenden Flanken der Antriebsausnehmungen 42 (siehe beispielsweise Figuren 24 und 26) in radialer Richtung vergrößern. Die Antriebsausnehmungen 42 weiten sich in radialer Richtung auf. Auch dadurch kann das sichere "Einfädeln" bzw. der sichere Eingriff des Antriebselements 74 in eine der Antriebsausnehmungen 42 selbst bei einem vergrößerten radialen Abstand zwischen der Antriebseinrichtung 38 und der dem Antriebsbogen 24 sichergestellt werden.

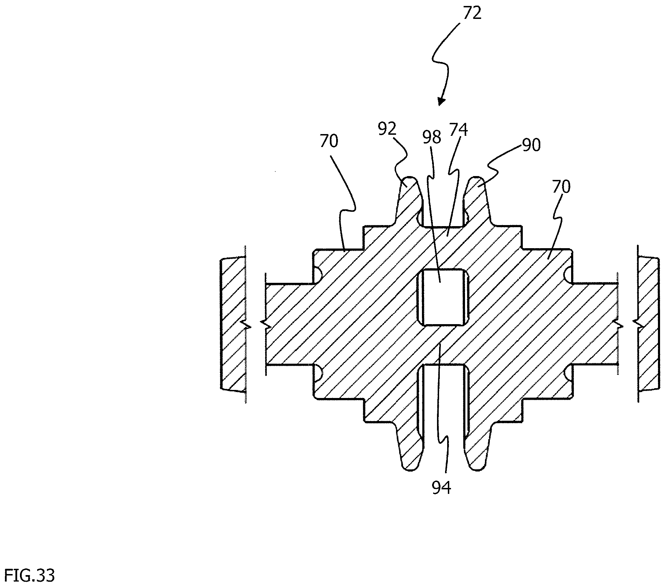

Figur 32 entspricht Figur 31, wobei in Figur 32 die Schnittlinie XXXIII-XXXIII eingetragen wurde. Figur 33 zeigt eine Schnittansicht entlang der Schnittlinie XXXIII-XXXIII in Figur 32. Der Antriebsabschnitt 72 weist zwei Verbindungselemente 90 und 92 auf. Die Verbindungselemente 90 und 92, das Antriebselement 74 und das Halteelement 94 können einstückig ausgebildet sein. Das Antriebselement 74 und das Halteelement 94 erstrecken sich zwischen den scheibenförmigen Verbindungselementen 90 und 92. Das Antriebselement 74 ist in radialer Richtung versetzt zu dem Halteelement 94 angeordnet, so dass der Freiraum 98 gebildet wird.

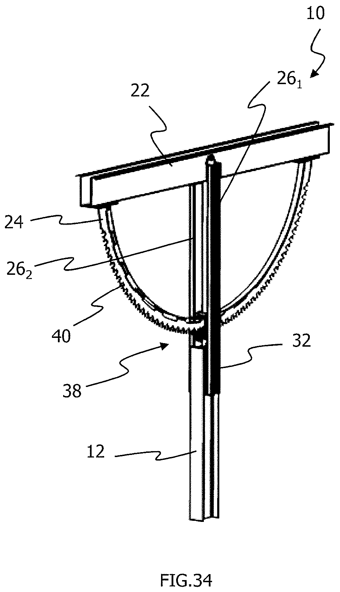

Die im Folgenden beschriebenen Figuren 34 bis 42 zeigen eine Schwenkeinheit 10 gemäß einer dritten Ausführungsform. Für gleichartige oder gleichwirkende Merkmale oder Komponenten werden die selben Bezugszeichen wie bei den ersten beiden Ausführungsformen verwendet. Zur Vermeidung von Wiederholungen werden im Folgenden die Unterschiede zwischen der dritten Ausführungsform und den vorherigen Ausführungsformen im Detail beschrieben. Komponenten und Merkmale, die bereits bezüglich der ersten und/oder der zweiten Ausführungsform im Detail beschrieben wurden, werden nicht erneut detailliert beschrieben. Die Beschreibung dieser Komponenten und Merkmale gilt analog auch für die dritte Ausführungsform.

Figur 34 zeigt eine perspektivische Ansicht einer Schwenkeinheit 10 gemäß einer dritten Ausführungsform im an einem Pfosten 12 angebrachten Zustand. Die Schwenkeinheit 10 weist einen Querträger 22, einen daran angebrachten Antriebsbogen 24 und zwei Trägerelemente 26₁ und 26₂ auf. Die Antriebseinrichtung 38 ist in Figur 34 lediglich andeutungsweise erkennbar. Die Schwenkeinheit 10 ist über die Trägerelemente 26₁ und 26₂ mit dem Pfosten 12 verbunden. Die Enden 32 der Trägerelemente 26₁ und 26₂ bilden einen Verbindungsabschnitt, über den die Trägerelemente 26₁ und 26₂ miteinander und mit dem Pfosten12 verbunden sind. Die Pfosten 12 gemäß dieser Ausführungsform haben einen H-förmigen Querschnitt. Die Trägerelemente 26₁ und 26₂ stützen sich über in Figur 34 nicht erkennbare Distanzstücke an dem Pfosten 12 ab.

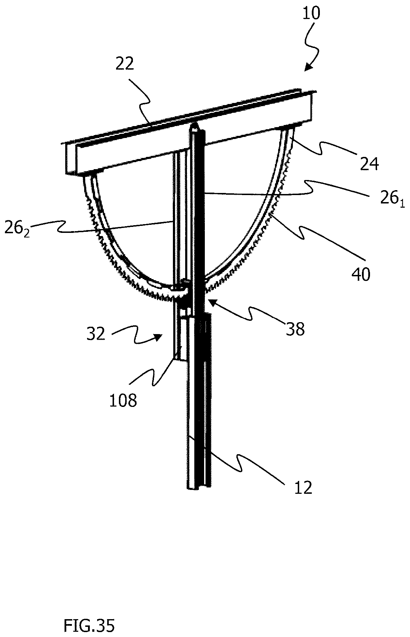

Figur 35 zeigt eine weitere perspektivische Ansicht einer Schwenkeinheit 10 gemäß einer dritten Ausführungsform im an einem Pfosten 12 angebrachten Zustand. Der wesentliche Unterschied zu der Darstellung gemäß Figur 34 ist in dem Querschnitt des Pfostens 12 zu sehen. Gemäß Figur 35 ist der Pfosten im Querschnitt C-förmig ausgebildet und hat keinen H-förmigen Querschnitt wie der Pfosten 12 gemäß Figur 34. Das Trägerelement 26₂ stützt sich über ein Distanzstück 108 an dem Pfosten 12 ab. Das Trägerelement 26₁ liegt an dem Pfosten 12 an. Wie erwähnt, sind auch in Figur 34 Distanzstücke vorgesehen, die beiderseits an dem Pfosten 12 angeordnet und gleich groß sind. Diese Distanzstücke sind in Figur 34 nicht gezeigt.

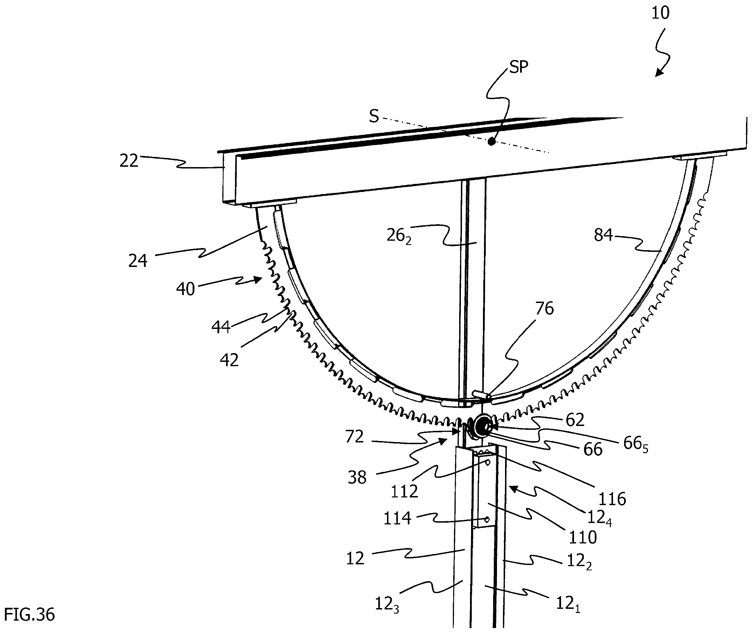

Figur 36 zeigt eine vergrößerte perspektivische Ansicht der Schwenkeinheit 10, wobei das Trägerelement 26₁ ausgeblendet wurde. In Figur 36 ist der H-förmige Querschnitt des Pfostens 12 deutlich erkennbar. Der H-förmige Querschnitt des Pfosten 12 setzt sich aus einem Querschenkel 12₁ und zwei Seitenschenkeln 12₂ und 12₃ zusammen, die über den Querschenkel 12₁ miteinander verbunden werden. An dem Querschenkel 12₁ liegt beidseitig ein Distanzstück 110 an. Die Distanzstücke 110, das Trägerelement 26₂ und auch das in Figur 36 nicht gezeigte Trägerelement 26₁ sind über Verbindungselemente 112 und 114 mit dem Pfosten 12 verbunden. Dazu weist der Querschenkel 12₁ des Pfostens 12 mehrere Öffnungen 116 auf, die in Figur 36 andeutungsweise oberhalb des Distanzstücks 110 erkennbar sind. Die Öffnungen 116 sind in einem Endabschnitt 12₄ des Pfostens 12 ausgebildet, der zur Verbindung mit der Schwenkeinheit 10 dient. Der Endabschnitt 12₄ bildet einen Verbindungsabschnitt zur Verbindung des Pfostens 12 mit den Trägerelementen 26₁ und 26₂.

Der Querträger 22 weist einen U-förmigen oder hutförmigen Querschnitt auf. An dem Querschenkel der U-Form ist der Antriebsbogen 24 befestigt. Der Antriebsbogen 24 weist die Antriebskontur 40 auf. Die Antriebskontur 40 setzt sich aus mehreren Antriebsausnehmungen 42 und mehreren Halteausnehmungen 44 zusammen, die in Umfangsrichtung des Antriebsbogens 24 wechselweise angeordnet sind. Die Antriebseinrichtung 38 steht über ihren Antriebsabschnitt 72 mit der Antriebskontur 40 des Antriebsbogens 24 in Eingriff.

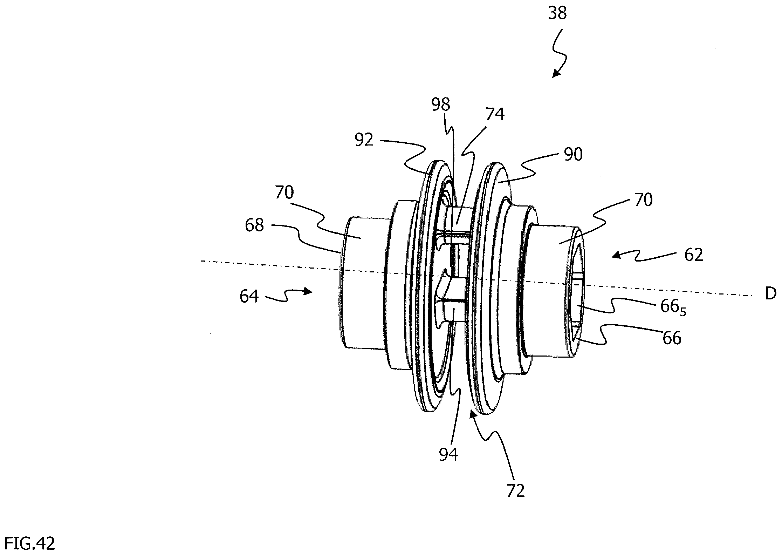

In Figur 36 ist der Kopplungsabschnitt 66 des Kopplungselements 62 erkennbar. Der Kopplungsabschnitt 66 weist eine Ausnehmung 66₅ auf, die einen sechskantförmigen Querschnitt hat. Gleiches gilt für den Kopplungsabschnitt 68 des Kopplungselements 64, das jedoch in Figur 36 nicht gezeigt ist (siehe Figur 42). Der Antriebsbogen 24 kann sich über sein Basiselement 84 in radialer Richtung an dem Führungselement 76 abstützen. Das Führungselement 76 ist in Form eines radialen Anschlags mit kreisförmigem Querschnitt ausgebildet.

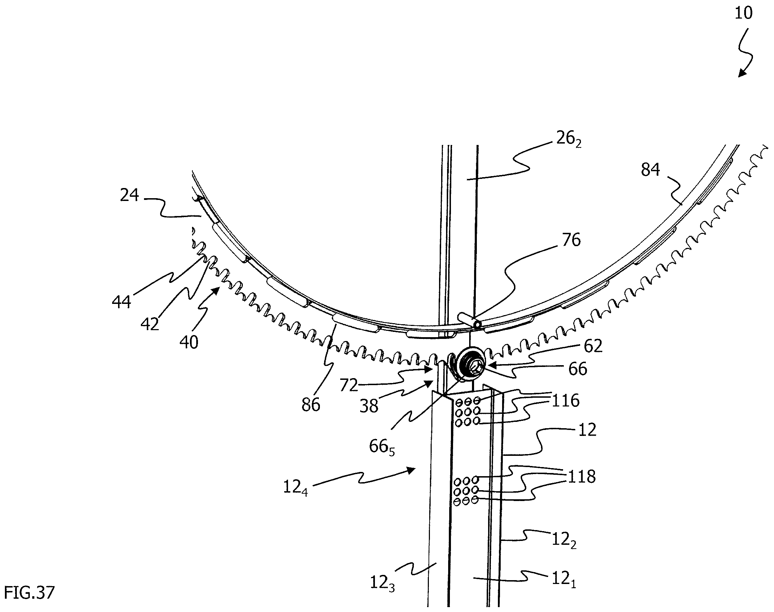

Figur 37 zeigt einen vergrößerten Ausschnitt einer Seitenansicht, in dem zusätzlich zu dem Trägerelement 26₁ auch das Distanzstück 110 ausgeblendet wurde. In Figur 37 sind die Öffnungen 116 und 118 an dem Querschenkel 12₁ des Pfostens 12 erkennbar. Die Öffnungen 116 und 118 sind in einem Endabschnitt 12₄ des Pfostens 12 ausgebildet, der zur Verbindung mit der Schwenkeinheit 10 dient. Der Endabschnitt 12₄ bildet einen Verbindungsabschnitt zur Verbindung mit den Trägerelementen 26₁ und 26₂. Der Endabschnitt 12₄ des Pfostens 12 wird mit dem einen Verbindungsabschnitt bildenden Ende 32 (in Figur 37 nicht gezeigt, siehe Figuren 34 und 35) der Trägerelemente 26₁ und 26₂ verbunden. Aus Gründen der Übersichtlichkeit sind jeweils nur drei Öffnungen 116 bzw. 118 bezeichnet. Die Öffnungen 116 und 118 sind in vertikaler Richtung zueinander versetzt. In jeweils eine oder mehrere der Öffnungen 116, 118 können die in den Figur 36 gezeigten Verbindungselemente 112 und 114 eingesetzt werden, um eine Verbindung zwischen den Trägerelementen 26₁ (in Figur 37 nicht gezeigt) und 26₂, den Distanzstücken 110 (in Figur 37 nicht gezeigt) und dem Pfosten 12 herzustellen. Es stehen mehrere Öffnungen 116, 118 zur Herstellung der Verbindung zwischen dem Pfosten 12 und den Trägerelementen 26₁ (nicht gezeigt) und 26₂ zur Auswahl. Durch die geeignete Auswahl der Öffnungen 116, 118, die zur Herstellung einer Verbindung zwischen den Trägerelementen 26₁ (in Figur 37 nicht gezeigt) und 26₂ und dem Pfosten 12 verwendet werden sollen, können Versätze in horizontaler Richtung und vertikaler Richtung ausgeglichen werden. Derartige Versätze können insbesondere bei der Verbindung einer Schwenkeinheit 10 mit einer weiteren Schwenkeinheit (siehe Figur 1) oder einem Antrieb bei Montagetoleranzen und Unebenheiten im Gelände vorliegen auftreten oder wenn benachbarte Pfosten oder Schwenkeinheiten nicht in einer Flucht liegen.

In Figur 37 ist ferner der Kopplungsabschnitt 66 des Kopplungselements 62 erkennbar. Der Kopplungsabschnitt 66 weist eine Ausnehmung 66₅ auf, die einen sechskantförmigen Querschnitt hat. In die Ausnehmung 66₅ des Kopplungsabschnitts 66 kann ein Adapter oder direkt eine Antriebswelle (siehe Figur 1) mit einem Abschnitt oder Vorsprung mit einem sechskantförmigen Querschnitt eingesteckt werden und die Antriebseinrichtung 38 antreiben. Gleiches gilt für den Kopplungsabschnitt 68 des in Figur 37 nicht gezeigten Kopplungselements 64 (siehe Figur 42).

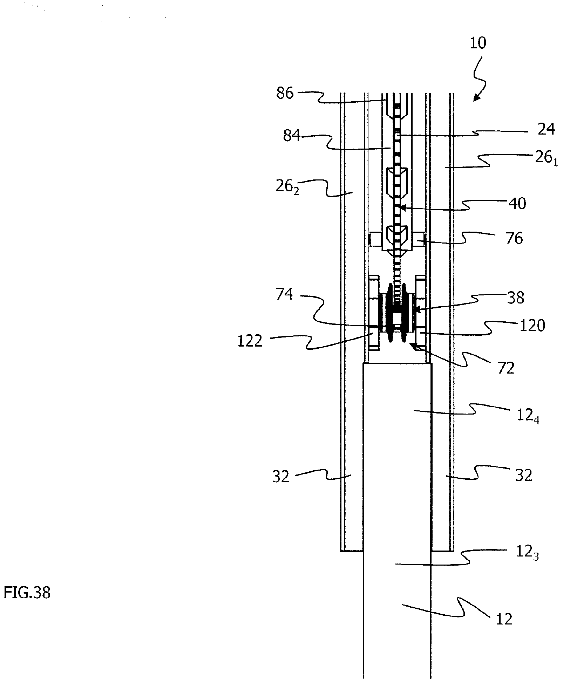

Figur 38 zeigt einen Ausschnitt einer Seitenansicht der Schwenkeinheit 10 im an einem Pfosten 12 angebrachten Zustand. Der Pfosten 12 weist einen H-förmigen Querschnitt auf. Die Antriebseinrichtung 38 erstreckt sich zwischen den beiden Trägerelementen 26₁ und 26₂. Die Trägerelemente 26₁ und 26₂ weisen jeweils eine Lagerstelle 120 und 122 auf, an denen die Antriebseinrichtung 38 mit ihren in Figur 38 nicht gezeigten Lagerabschnitten gelagert ist. Die Lagerstellen 120 und 122 sind in Form von Lagerflanschen ausgebildet, die mit den Trägerelementen 26₁ und 26₂ verbunden sind. Die Lagerflansche bzw. die Lagerstellen 120 und 122 nehmen die Lagerabschnitte (nicht gezeigt) der Antriebseinrichtung 38 abschnittsweise auf. Die Lagerstellen 120 und 122 können Gleitlager aufweisen.

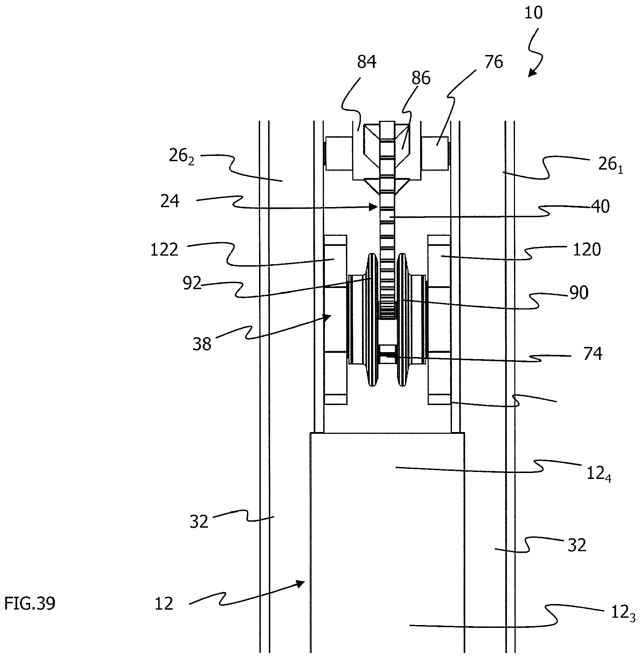

Figur 39 zeigt einen vergrößerten Ausschnitt der Ansicht gemäß Figur 38. Die Antriebseinrichtung 38 ist mit ihren in Figur 39 nicht gezeigten Lagerabschnitten in den Lagerstellen 120, 122 an den Trägerelementen 26₁ und 26₂ gelagert. Der Antriebsbogen 24 verläuft ebenfalls zwischen den beiden Trägerelementen 26₁ und 26₂. Der Antriebsbogen 24 kann sich über seinen Basisabschnitt 84 an dem Führungselement 76 abstützen, das in Form eines radialen Anschlags mit kreisförmigem Querschnitt ausgebildet ist. Insbesondere die Antriebskontur 40 des Antriebsbogens 24 verläuft zwischen den beiden Verbindungselementen 90 und 92 der Antriebseinrichtung 38. Zwischen den Verbindungselementen 90 und 92 erstreckt sich ebenfalls das Antriebselement 74 und das in Figur 39 nicht erkennbare Halteelement 94. Das in Figur 39 nicht erkennbare Halteelement 94 befindet sich in der in Figur 39 gezeigten Stellung der Antriebseinrichtung 38 in Eingriff mit der Antriebskontur 40 und insbesondere in Eingriff mit einer Halteausnehmung 44 (siehe Figur 37). In den Figuren 38 und 39 befindet sich der Pfosten 12 im Wesentlichen mittig zwischen den beiden Trägerelementen 26₁ und 26₂.

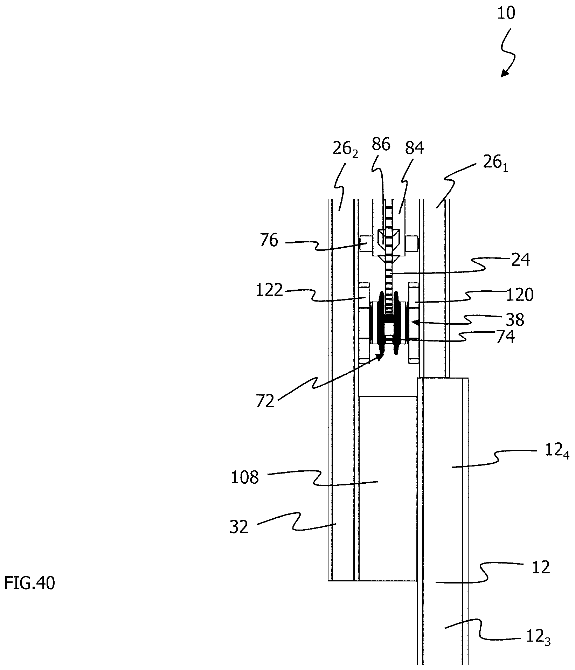

Figur 40 zeigt einen Ausschnitt einer Seitenansicht der Schwenkeinheit 10 in am Pfosten 12 angebrachten Zustand. Im Unterschied zu den Figuren 38 und 39 weist der Pfosten 12 hier einen C-förmigen Querschnitt auf. Das Trägerelement 26₂ stützt sich über ein Distanzstück 108 an dem Pfosten 12 ab, wobei in Figur 40 der Seitenschenkel 12₃ des C- förmigen Pfostens 12 erkennbar ist. Das Ende 32 (nicht erkennbar) des Trägerelements 26₁ ist in dem C-Profil des Pfostens 12 aufgenommen und wie das Trägerelement 26₂ mit dem Endabschnitt 12₄ des Pfostens 12 verbunden.

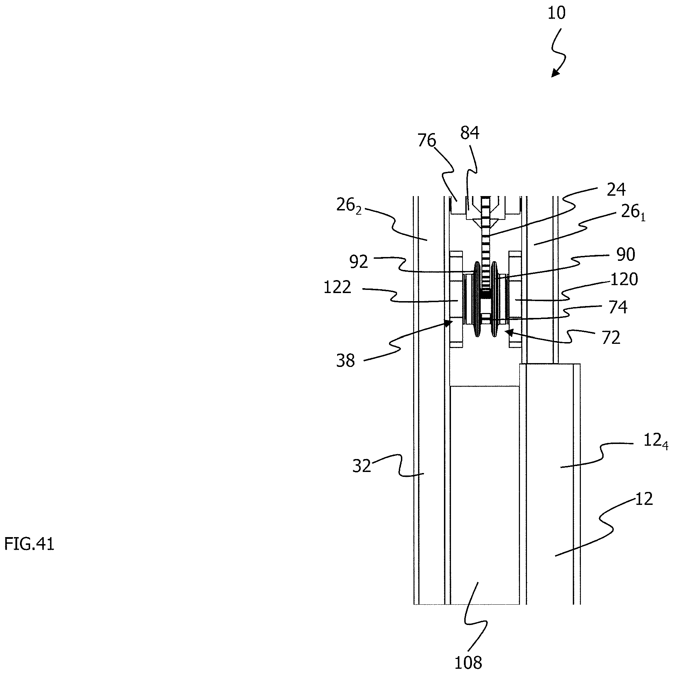

Figur 41 zeigt einen vergrößerten Ausschnitt der Ansicht gemäß Figur 40. Das Trägerelement 26₂ stützt sich über das Distanzstück 108 an dem Pfosten 12 ab. Das Trägerelement 26₁, das Distanzstück 108 und das Trägerelement 26₂ sind über in Figur 41 nicht gezeigten Verbindungselementen miteinander und mit dem Pfosten 12 verbunden.

Ferner sind in Figur 41 die an den Trägerelementen 26₁ und 26₂ vorgesehenen Lagerstellen 120 und 122 gezeigt, an denen die Antriebseinrichtung 38 gelagert ist. Die Antriebseinheit 38 erstreckt sich zwischen den Trägerelementen 26₁ und 26₂ und ist mit ihren Lagerabschnitten (nicht gezeigt) in den Lagervorsprüngen 120, 122 aufgenommen.

Figur 42 zeigt eine perspektivische Ansicht der Antriebseinrichtung 38. Die Antriebseinrichtung 38 weist Kopplungselemente 62 und 64 auf, zwischen denen ein Antriebsabschnitt 72 angeordnet ist. Die Verbindungselemente 90 und 92 verbinden die Kopplungselemente 62 und 64 mit dem Antriebselement 74 und dem Halteelement 94. Das Antriebselement 74 und das Halteelement 94 erstrecken sich zwischen den Verbindungselementen 90 und 92 und sind durch den Freiraum 98 voneinander beabstandet.

Die Kopplungselemente 62 und 64 weisen jeweils einen Lagerabschnitt 70 auf, mit dem die Antriebseinrichtung 38 in den Lagerstellen 120 und 122 (siehe Figuren 38 bis 41) aufgenommen werden kann. Radial einwärts der Lagerabschnitte 70 ist der Kopplungsabschnitt 66 an dem Kopplungselement 62 erkennbar. Der Kopplungsabschnitt 66 weist eine Ausnehmung 66₅ auf. Die Ausnehmung 66₅ hat einen sechskantförmigen Querschnitt. In dem Kopplungsabschnitt 66 kann ein sechskantförmiger Vorsprung einer Antriebswelle 14, eines Adapters oder eines Antriebs eingesteckt werden, um die Antriebseinrichtung 38 drehmomentübertragend mit einem Antrieb zu koppeln (siehe Figuren 1 und 2). Auch das Kopplungselement 64 weist einen derartigen Kopplungsabschnitt 68 mit einer Ausnehmung auf, die jedoch in Figur 42 nicht gezeigt ist.

Im Folgenden wird die Funktion der Schwenkeinheit 10 erläutert. Die Schwenkeinheit 10 kann über eine in Figur 1 gezeigte Antriebswelle 14 oder einen Antrieb angetrieben werden. Die Antriebswelle 14 kann dazu mit der Antriebseinrichtung 38 über eines der Kopplungselemente 62 oder 64 drehmomentübertragend gekoppelt werden. Die Antriebseinrichtung 38 ist um die Drehachse D (siehe Figuren 9, 11, 15, 16, 24, 26 bis 28, 31, 32 und 42) drehbar in den Befestigungselementen 34 und 36 bzw. in den Lagerstellen 120 und 122 gelagert. Die Drehachse D der Antriebseinrichtung 38 erstreckt sich im Wesentlichen parallel zur Schwenkachse S. Eine mit der Antriebseinrichtung 38 verbundene Antriebswelle 14 kann sich ebenfalls im Wesentlichen parallel zur Schwenkachse S erstrecken.

Das über eines der Kopplungselemente 62 und 64 auf die Antriebseinrichtung 38 übertragene Antriebsmoment versetzt die Antriebseinrichtung 38 in Rotation. Das Antriebselement 74 dreht sich dadurch auf einer Kreisbahn mit einem vorbestimmten radialen Abstand um die Drehachse D. Die Antriebseinrichtung 38 ist über ihr Antriebselement 74 mit dem Antriebsbogen 24 drehmomentübertragend gekoppelt, sodass durch eine Drehbewegung der Antriebseinrichtung 38 um die Drehachse D der Antriebsbogen 24 um die Schwenkachse S schrittweise verschwenkt werden kann. Das Antriebselement 74 kann durch die von der Antriebseinrichtung 38 ausgeführte Drehbewegung in eine der Antriebsausnehmungen 42 eingreifen, den Antriebsbogen 24 mitnehmen und die entsprechende Antriebsausnehmung 42 wieder verlassen. Auf diese Weise wird ein Verstellschritt um die Schwenkachse S ausgeführt und der Antriebsbogen 24 mit dem daran angebrachten Querträger 22 in eine neue Schwenkstellung überführt. Zwischen dem Eingreifen in die Antriebsausnehmung 42 und dem Verlassen der Antriebsausnehmung 42 drückt das Antriebselement 74 gegen eine Flanke der Antriebsausnehmung 42. Dadurch wird ein Drehmoment auf den Antriebsbogen 24 übertragen, sodass der Verstellschritt des Antriebsbogens 24 und des Querträgers 22 um die Schwenkachse S ausgeführt wird.

Durch die Bewegung des Antriebselements 74 und des Antriebsbogen 24 gelangt das Halteelement 94 der Antriebseinrichtung 38 mit einer Halteausnehmung 44 in Eingriff. Das Halteelement 94 greift in eine zu der Antriebsausnehmung 42, die das Antriebselement 74 gerade verlassen hat, benachbarte Halteausnehmung 44 ein. Das Halteelement 94 kann sich in der entsprechenden Halteausnehmung 44 drehen. Das Halteelement 94 greift mit einem ersten Abschnitt seines Querschnitts in die Halteausnehmung 44 ein, wobei sich dieser Abschnitt aufgrund der Drehbewegung der Antriebseinrichtung 38 mit dem Halteelement 94 kontinuierlich vergrößert. Durch den Eingriff des Halteelements 94 in die Halteausnehmung 44 kann ein Verdrehen bzw. Verschwenken des Querträgers 22 und des daran angebrachten Antriebsbogens 24 um die Schwenkachse S verhindert werden. Die Antriebseinrichtung 38 und der Antriebsbogen 24 befinden sich somit in einer Sperrstellung. Wird die Antriebseinrichtung 38 in diesem Zustand weiter angetrieben, verlässt das Halteelement 94 die Halteausnehmung 44 wieder und gibt den Antriebsbogen 24 frei für einen von dem Antriebselement 74 initiierten Verstellschritt.

Das Halteelement 94 kann, wenn es sich in Eingriff mit einer Halteausnehmung 44 befindet, eine Relativverdrehung zwischen dem Antriebsbogen 24 und dem damit verbundenen Querträger 22 und dem jeweiligen Trägerelement 26, 26₁, 26₂ im an wenigstens einem Pfosten 12 angebrachten Zustand verhindern. Sobald das Halteelement 94 auch nur mit einem (Teil-)Abschnitt in eine Halteausnehmung 44 eingreift, wird ein Verdrehen des Antriebsbogens 24 um die Schwenkachse S verhindert, d.h. eine vollständige Aufnahme des Querschnitts des Halteelements 94 in einer Halteausnehmung 44 ist zum Verhindern einer Verdrehung des Antriebsbogens 24 somit nicht notwendig. Durch die wechselweise Anordnung der Antriebsausnehmungen 42 und der Halteausnehmung 44 können wechselweise ein von dem Antriebselement 74 initiierter Verstellschritt des Antriebsbogens 24 oder ein Halteschritt ausgeführt werden, in dem der Antriebsbogen 24 über das Halteelement 94 in einer Sperrstellung gehalten werden kann. Das Halteelement 94 kann ein unerwünschtes Verstellen der Schwenkeinheit 10 um die Schwenkachse S verhindern, ohne dass dadurch ein Torsionsmoment auf die Antriebswelle 14 und/oder den Antrieb übertragen werden würde.

Soll der Antriebsbogen 24 und der damit verbundene Querträger 22 jedoch weiter verschwenkt werden, wird die Antriebseinrichtung 38 weiter angetrieben, bis das Antriebselement 74 in die nächste Antriebsausnehmung 42 eingreift und ein weiterer Verstellschritt ausgeführt wird. Soll der Antriebsbogen 24 und der damit verbundene Querträger 22 in der eingestellten Stellung arretiert werden, wird die Antriebseinrichtung 38 in der Sperrstellung angehalten. In dieser Stellung befindet sich das Halteelement 94 zumindest abschnittsweise mit einer Halteausnehmung 44 in Eingriff.

Die Verbindungselemente 90 und 92 bilden eine Führung für den Antriebsbogen 24 in Richtung der Drehachse D bzw. der Schwenkachse S, die sich parallel zueinander erstrecken. Dazu schließen die Verbindungselemente 90 und 92 den Antriebsbogen 24 zwischen sich ein. Aufgrund der Verbindungselemente 90 und 92 kann der Antriebsbogen 24 in axialer Richtung dem Antriebselement 74 und auch dem Halteelement 94 nicht ausweichen. Der Antriebsbogen 24 wird somit durch die Verbindungselemente 90 und 92 somit in Eingriff mit dem Antriebselement 74 und dem Halteelement 94 gehalten. Durch die von den Verbindungselementen 90 und 92 bereitgestellte Führungsfunktion kann der Aufbau der Schwenkeinheit 10 erheblich vereinfacht werden.

Durch die Schwenkeinheit 10 kann ferner die Montage einer Nachführvorrichtung NV erheblich vereinfacht werden. Die Schwenkeinheit 10 kann vormontiert werden. Die vormontierte Schwenkeinheit 10 kann dann als eigenständige Einheit mit bereits im Boden verankerten Pfosten 12 verbunden werden. Die Pfosten 12 werden mit dem Ende 32 des jeweiligen Trägerelements 26, 26₁, 26₂ verbunden. Dies bildet den Abschluss der Montage der Schwenkeinheit 10 an dem Pfosten 12. Sollen mehrere Schwenkeinheiten 10 (siehe Figur 1) vorgesehen sein, werden diese Schwenkeinheiten 10 entsprechend der Schwenkachse S miteinander in Flucht gebracht und unter einander über die Antriebswellen 14 und die Rahmenelemente bzw. Tragschienen 16 und 18 verbunden. Jedes Kopplungselement 62 und 64 der Antriebseinrichtung 38 kann über eine Antriebswelle 14 mit einer weiteren Schwenkeinheit 10 oder einem Antrieb bzw. Motor verbunden werden. Die Enden der Antriebswellen 14 bzw. entsprechende Adapter und/oder die Kopplungselemente der Antriebseinrichtung 38 sind derart ausgeführt, dass sowohl Fluchtungsfehler zwischen Antriebseinrichtung 38 und Antriebswelle 14 als auch Abstandstoleranzen zwischen den Antriebseinrichtung 38 in Richtung der Schwenkachse S ausgeglichen werden können.

## Patentansprüche

1. Schwenkeinheit (10) für eine Nachführvorrichtung (NV) für Solarmodule (20), mit:
wenigstens einem um eine Schwenkachse (S) verschwenkbaren Querträger (22),
wenigstens einem mit dem wenigstens einen Querträger (22) verbundenen Antriebsbogen (24), der mehrere Antriebsausnehmungen (42) und mehrere Halteausnehmungen (44) aufweist, und
wenigstens einer drehbar gelagerten Antriebseinrichtung (38), wobei die wenigstens eine Antriebseinrichtung (38) derart ausgebildet ist, dass sie zum Verschwenken des wenigstens einen Querträgers (22) in wenigstens eine der Antriebsausnehmungen (42) des Antriebsbogens (24) eingreift, und wobei die wenigstens eine Antriebseinrichtung (38) derart ausgebildet ist, dass sie zum Halten des Querträgers (22) in einer Schwenkstellung in wenigstens eine der Halteausnehmungen (44) eingreift, wobei die wenigstens eine Antriebseinrichtung (38) derart ausgebildet ist, dass die wenigstens eine Antriebseinrichtung (38) abwechselnd in wenigstens eine der Antriebsausnehmungen (42) und in wenigstens eine der Halteausnehmungen (44) eingreift, wobei die Antriebseinrichtung (38) wenigstens ein exzentrisch angeordnetes Antriebselement (74) aufweist, das zum Verschwenken des wenigstens einen Querträgers (22) in wenigstens eine der Antriebsausnehmungen (42) des Antriebsbogens (24) eingreift, wobei die wenigstens eine Antriebseinrichtung (38) wenigstens ein Halteelement (94) aufweist, das zum Halten des wenigstens einen Querträgers (22) in wenigstens eine der Halteausnehmungen (44) des Antriebsbogens (24) eingreift.

2. Schwenkeinheit nach Anspruch 1,
wobei die Schwenkeinheit (10) wenigstens ein Trägerelement (26) zum Verbinden der Schwenkeinheit (10) mit wenigstens einem im oder am Untergrund (U) verankerten oder verankerbaren Pfosten (12) aufweist, wobei der wenigstens eine Querträger (22) um die Schwenkachse (S) verschwenkbar mit dem wenigstens einen Trägerelement (26) verbunden ist.

3. Schwenkeinheit (10) nach einem der voranstehenden Ansprüche,
wobei die wenigstens eine Antriebseinrichtung (38) derart ausgebildet ist, dass sie eine axiale und/oder radiale Führung für den wenigstens einen Antriebsbogen (24) bildet.

4. Schwenkeinheit (10) nach einem der voranstehenden Ansprüche,
wobei die Schwenkeinheit (10) wenigstens eine Führungseinrichtung (76) aufweist, die den Antriebsbogen (24) in radialer Richtung führt.

5. Schwenkeinheit (10) nach einem der voranstehenden Ansprüche,
wobei sich das wenigstens eine Antriebselement (74) und/oder das wenigstens eine Halteelement (94) im wesentlichen parallel zur Drehachse (D) der Antriebseinrichtung (38) erstrecken.

6. Schwenkeinheit (10) nach einem der voranstehenden Ansprüche,
wobei die wenigstens eine Antriebseinrichtung (38) wenigstens einen Kopplungsabschnitt (66, 68) zum Koppeln der Antriebseinrichtung (38) mit einem Antrieb eines Nachführsystems (NV) und/oder mit einer weiteren Schwenkeinheit (10) aufweist.

7. Schwenkeinheit (10) nach Anspruch 6,
wobei der wenigstens eine Kopplungsabschnitt (66, 68) zum Ausgleich von Winkelversätzen und/oder zum Ausgleich von Toleranzen in Richtung der Schwenkachse (S) ausgebildet ist.

8. Schwenkeinheit (10) nach einem der Ansprüche 6 oder 7, wobei die wenigstens eine Antriebseinrichtung (38) zwei Kopplungselemente (62,64) aufweist, wobei zwischen den Kopplungselementen (62,64) einen Antriebsabschnitt (72) ausgebildet ist, in dem das Antriebselement (74) vorgesehen ist, wobei die Kopplungselemente (62,64) jeweils einen der wenigstens einen Kopplungsabschnitt (66,68) und einen Lagerabschnitt (70) aufweisen, wobei die Kopplungsabschnitte (66,68) mit einem Querschnitt zur Kopplung mit einer Antriebswelle (14) versehen sind, und wobei die Antriebseinrichtung (38) wenigstens ein Verbindungselement (90, 92) aufweist, das die Kopplungselemente (62,64) (62, 64) mit dem wenigstens einen Antriebselement (74) und dem wenigstens einen Halteelement (94) verbindet.

9. Schwenkeinheit (10) nach Anspruch 8,
wobei die wenigstens eine Antriebseinrichtung (38) zwei Verbindungselemente (90, 92) aufweist, die zur axialen Führung des Antriebsbogens (24) ausgebildet sind.

10. Schwenkeinheit (10) nach Anspruch 8 oder 9,
wobei sich das wenigstens eine Antriebselement (74) und/oder das wenigstens eine Halteelement (94) zwischen den beiden Verbindungselementen (90, 92) erstrecken.

11. Schwenkeinheit (10) nach einem der Ansprüche 2 bis 10,
wobei die Schwenkeinheit (10) wenigstens ein Befestigungselement (34, 36, 120, 122) zum Anbringen der wenigstens einen Antriebseinrichtung (38) an dem wenigstens einen Trägerelement (26) oder dem wenigstens einen Pfosten (12) aufweist, wobei die wenigstens eine Antriebseinrichtung (38) an dem wenigstens einem Befestigungselement (34, 36, 120, 122) drehbar gelagert ist.

12. Schwenkeinheit (10) nach einem der voranstehenden Ansprüche,
wobei das wenigstens eine Antriebselement (74) im Querschnitt oval, linsenförmig, ellipsenförmig oder kreisförmig ausgebildet ist.

13. Schwenkeinheit (10) nach einem der voranstehenden Ansprüche 2-12,
wobei sich die wenigstens eine Antriebseinrichtung (38) zumindest abschnittsweise durch das wenigstens eine Trägerelement (26) erstreckt, und/oder die wenigstens eine Antriebseinrichtung (38) innerhalb wenigstens eines Trägerelements (26) angeordnet ist, oder wobei die wenigstens eine Antriebseinrichtung (38) zwischen wenigstens zwei Trägerelementen (26₁, 26₂) angeordnet ist.

14. Schwenkeinheit (10) nach einem der voranstehenden Ansprüche,
wobei die wenigstens eine Antriebswelle (14) oder ein entsprechender Adapter zum Ausgleich von Winkelversätzen und/oder zum Ausgleich von Toleranzen in Richtung der Schwenkachse (S) ausgebildet ist.

15. Nachführvorrichtung (NV) für Solarmodule (20) mit wenigstens einer Schwenkeinheit (10) nach einem der Ansprüche 1 bis 14, die an wenigstens einem im oder am Untergrund (U) verankerten oder verankerbaren Pfosten (12) angeordnet ist, wobei die wenigstens eine Schwenkeinheit (10) über wenigstens eine Antriebswelle (14) mit wenigstens einer weiteren Schwenkeinheit (10) und/oder einem Antrieb gekoppelt ist.

## Claims

1. A pivoting unit (10) for a tracking apparatus (NV) for solar modules (20),
comprising:
at least one cross member (22) pivotable about a pivot axis (S),
at least one drive arch (24) connected to the at least one cross member (22), which comprises a plurality of drive recesses (42) and a plurality of retaining recesses (44), and
at least one rotatably mounted drive device (38), the at least one drive device (38) being designed such that it engages in at least one of the drive recesses (42) of the drive arch (24) for pivoting the at least one cross member (22), and wherein the at least one drive device (38) is designed such that it engages in at least one of the retaining recesses (44) in order to hold the cross member (22) in a pivot position, wherein the at least one drive device (38) is designed such that the at least one drive device (38) alternately engages in at least one of the drive recesses (42) and in at least one of the retaining recesses (44), wherein the drive device (38) comprises at least one eccentrically arranged drive element (74) which engages in at least one of the drive recesses (42) of the drive arch (24) for pivoting the at least one cross member (22), wherein the at least one drive device (38) comprises at least one retaining element (94) which engages in at least one of the retaining recesses (44) of the drive arch (24) in order to hold the at least one cross member (22).

2. The pivoting unit of claim 1,
wherein the pivoting unit (10) comprises at least one support element (26) for connecting the pivoting unit (10) to at least one post (12) which is anchored or can be anchored in or on the ground (U), the at least one cross member (22) being pivotally connected about the pivot axis (S) to the at least one support element (26).

3. The pivoting unit (10) of any one of the preceding claims,
wherein the at least one drive device (38) is designed such that it forms an axial and/or radial guide for the at least one drive arch (24).

4. The pivoting unit (10) of any one of the preceding claims,
wherein the pivoting unit (10) comprises at least one guide device (76) which guides the drive arch (24) in the radial direction.

5. The pivoting unit (10) of any one of the preceding claims,
wherein the at least one drive element (74) and/or the at least one retaining element (94) extend essentially parallel to the axis of rotation (D) of the drive device (38).

6. The pivoting unit (10) of any one of the preceding claims,
wherein the at least one drive device (38) comprises at least one coupling section (66, 68) for coupling the drive device (38) to a drive of a tracking system (NV) and/or to a further pivoting unit (10).

7. The pivoting unit (10) of claim 6,
wherein the at least one coupling section (66, 68) is designed to compensate for angular misalignments and/or to compensate for tolerances in the direction of the pivot axis (S).

8. The pivoting unit (10) of any one of claims 6 or 7,
wherein the at least one drive device (38) comprises two coupling elements (62, 64), wherein between the coupling elements (62, 64) a drive section (72) is configured in which the drive element (74) is provided, wherein the coupling elements (62, 64) each comprise one of the at least one coupling section (66, 68) and a bearing section (70), wherein the coupling sections (66, 68) are provided with a cross-section for coupling to a drive shaft (14), and wherein the drive device (38) comprises at least one connecting element (90, 92) which connects the coupling elements (62, 64) (62, 64) to the at least one drive element (74) and the at least one retaining element (94).

9. The pivoting unit (10) of claim 8,
wherein the at least one drive device (38) comprises two connecting elements (90, 92) which are designed for axially guiding the drive arch (24).

10. The pivoting unit (10) of claim 8 or 9,
wherein the at least one drive element (74) and/or the at least one retaining element (94) extend between the two connecting elements (90, 92).

11. The pivoting device (10) of any one of claims 2 to 10,
wherein the pivoting unit (10) comprises at least one fastening element (34, 36, 120, 122) for attaching the at least one drive device (38) to the at least one support element (26) or the at least one post (12), the at least one drive device (38) being rotatably mounted on the at least one fastening element (34, 36, 120, 122).

12. The pivoting unit (10) of any one of the preceding claims,
wherein the at least one drive element (74) is oval, lenticular, elliptical or circular in cross-section.

13. The pivoting unit (10) of any one of the preceding claims 2-12,
wherein the at least one drive device (38) extends at least in sections through the at least one support element (26), and/or wherein the at least one drive device (38) is arranged within at least one support element (26), or wherein the at least one drive device (38) is arranged between at least two support elements (26₁, 26₂).

14. The pivoting unit (10) of any one of the preceding claims,
wherein the at least one drive shaft (14) or a corresponding adapter is designed to compensate for angular misalignments and/or to compensate for tolerances in the direction of the pivot axis (S).

15. A tracking apparatus (NV) for solar modules (20) comprising at least one pivoting unit (10) of any one of claims 1 to 14, which is arranged on at least one post (12) which is anchored or can be anchored in or on the ground (U),
wherein the at least one pivoting unit (10) is coupled to at least one further pivoting unit (10) and/or a drive via at least one drive shaft (14).

## Revendications

1. Unité de pivotement (10) pour un dispositif de poursuite (NV) pour modules solaires (20), comportant :
au moins une traverse (22) pouvant pivoter autour d'un axe de pivotement (S),
au moins un secteur d'entraînement (24) relié à ladite au moins une traverse (22), qui comprend plusieurs évidements d'entraînement (42) et plusieurs évidements de maintien (44), et
au moins un moyen d'entraînement (38) monté rotatif, ledit au moins un moyen d'entraînement (38) étant conçu de telle sorte qu'il s'engage dans au moins un des évidements d'entraînement (42) du secteur d'entraînement (24) pour faire pivoter ladite au moins une traverse (22), et ledit au moins un moyen d'entraînement (38) étant conçu de telle sorte qu'il s'engage dans au moins un des évidements de maintien (44) pour maintenir la traverse (22) dans une position de pivotement,
dans laquelle ledit au moins un moyen d'entraînement (38) est conçu de telle sorte qu'il s'engage alternativement dans au moins un des évidements d'entraînement (42) et dans au moins un des évidements de maintien (44), le moyen d'entraînement (38) comprenant au moins un élément d'entraînement (74) disposé de manière excentrique qui s'engage dans au moins un des évidements d'entraînement (42) du secteur d'entraînement (24) pour faire pivoter ladite au moins une traverse (22), ledit au moins un moyen d'entraînement (38) comprenant au moins un élément de maintien (94) qui s'engage dans au moins un des évidements de maintien (44) du secteur d'entraînement (24) pour maintenir ladite au moins une traverse (22).

2. Unité de pivotement selon la revendication 1,
dans laquelle l'unité de pivotement (10) comprend au moins un élément de support (26) pour relier l'unité de pivotement (10) à au moins un poteau (12) ancré ou pouvant être ancré dans ou sur le sol (U), ladite au moins une traverse (22) étant reliée audit au moins un élément de support (26) de manière à pouvoir pivoter autour de l'axe de pivotement (S).

3. Unité de pivotement (10) selon l'une des revendications précédentes,
dans laquelle ledit au moins un moyen d'entraînement (38) est conçu de telle sorte qu'il forme un guidage axial et/ou radial pour ledit au moins un secteur d'entraînement (24).

4. Unité de pivotement (10) selon l'une des revendications précédentes,
dans laquelle l'unité de pivotement (10) comprend au moins un moyen de guidage (76) qui guide le secteur d'entraînement (24) dans la direction radiale.

5. Unité de pivotement (10) selon l'une des revendications précédentes,
dans laquelle ledit au moins un élément d'entraînement (74) et/ou ledit au moins un élément de maintien (94) s'étendent sensiblement parallèlement à l'axe de rotation (D) du moyen d'entraînement (38).

6. Unité de pivotement (10) selon l'une des revendications précédentes,
dans laquelle ledit au moins un moyen d'entraînement (38) comprend au moins une section de couplage (66, 68) pour coupler le moyen d'entraînement (38) à un entraînement d'un système de poursuite (NV) et/ou à une autre unité de pivotement (10).

7. Unité de pivotement (10) selon la revendication 6,
dans laquelle ladite au moins une section de couplage (66, 68) est conçue pour compenser des décalages angulaires et/ou pour compenser des tolérances dans la direction de l'axe de pivotement (S).

8. Unité de pivotement (10) selon l'une des revendications 6 ou 7,
dans laquelle ledit au moins un moyen d'entraînement (38) comprend deux éléments de couplage (62, 64), une section d'entraînement (72) étant formée entre les éléments de couplage (62, 64), dans laquelle l'élément d'entraînement (74) est prévu, les éléments de couplage (62, 64) comprenant chacun une desdites au moins une section de couplage (66, 68) et une section de palier (70), les sections de couplage (66, 68) étant pourvues d'une section transversale destinée au couplage à un arbre d'entraînement (14), et dans laquelle le moyen d'entraînement (38) comprend au moins un élément de liaison (90, 92) reliant les éléments de couplage (62, 64) audit au moins un élément d'entraînement (74) et audit au moins un élément de maintien (94).

9. Unité de pivotement (10) selon la revendication 8,
dans laquelle ledit au moins un moyen d'entraînement (38) comprend deux éléments de liaison (90, 92) qui sont conçus pour le guidage axial du secteur d'entraînement (24).

10. Unité de pivotement (10) selon la revendication 8 ou 9,
dans laquelle ledit au moins un élément d'entraînement (74) et/ou ledit au moins un élément de maintien (94) s'étendent entre les deux éléments de liaison (90, 92).

11. Unité de pivotement (10) selon l'une des revendications 2 à 10,
dans laquelle l'unité de pivotement (10) comprend au moins un élément de fixation (34, 36, 120, 122) pour monter ledit au moins un moyen d'entraînement (38) sur ledit au moins un élément de support (26) ou ledit au moins un poteau (12), ledit au moins un moyen d'entraînement (38) étant monté rotatif sur ledit au moins un élément de fixation (34, 36, 120, 122).

12. Unité de pivotement (10) selon l'une des revendications précédentes,
dans laquelle ledit au moins un élément d'entraînement (74) a une section transversale ovale, lenticulaire, elliptique ou circulaire.

13. Unité de pivotement (10) selon l'une des revendications 2 à 12 précédentes,
dans laquelle ledit au moins un moyen d'entraînement (38) s'étend au moins sur certaines parties à travers ledit au moins un élément de support (26), et/ou ledit au moins un moyen d'entraînement (38) est disposé à l'intérieur d'au moins un élément de support (26), ou dans laquelle ledit au moins un moyen d'entraînement (38) est disposé entre au moins deux éléments de support (26₁, 26₂).

14. Unité de pivotement (10) selon l'une des revendications précédentes,
dans laquelle ledit au moins un arbre d'entraînement (14) ou un adaptateur correspondant est conçu pour compenser des décalages angulaires et/ou pour compenser des tolérances dans la direction de l'axe de pivotement (S).

15. Dispositif de poursuite (NV) pour modules solaires (20) doté d'au moins une unité de pivotement (10) selon l'une des revendications 1 à 14, qui est disposée sur au moins un poteau (12) ancré ou pouvant être ancré dans ou sur le sol (U), ladite au moins une unité de pivotement (10) étant couplée par au moins un arbre d'entraînement (14) à au moins une autre unité de pivotement (10) et/ou à un entraînement.
